(19) Europäisches Patentamt
European Patent Office
Office européen des brevets

(11) **EP 4 488 910 A2**

(12) **EUROPEAN PATENT APPLICATION**

(43) Date of publication:
**08.01.2025 Bulletin 2025/02**

(21) Application number: **24214861.7**

(22) Date of filing: **15.07.2022**

(51) International Patent Classification (IPC):
*G06Q 20/20* (2012.01)

(52) Cooperative Patent Classification (CPC):
**H04L 67/04; G06F 21/606; G06F 21/645;
G06Q 20/204; G06Q 20/3278; G06Q 20/352;
G06Q 20/401; H04L 9/3247; H04L 9/40;
H04L 63/0485; H04L 63/0853; H04L 63/0884;
H04L 63/10; H04L 63/18; H04L 67/10;** (Cont.)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(62) Document number(s) of the earlier application(s) in accordance with Art. 76 EPC:
**22185315.3 / 4 307 610**

(71) Applicant: **Mastercard International Incorporated
Purchase, NY 10577 (US)**

(72) Inventors:
• **RADU, Cristian
1320 Beauvechain (BE)**

• **JOHNSON, Alan
Maldon, CM9 8HW (GB)**

(74) Representative: **Keltie LLP
No. 1 London Bridge
London SE1 9BA (GB)**

Remarks:
This application was filed on 22-11-2024 as a divisional application to the application mentioned under INID code 62.

(54) **CONTACTLESS TRANSACTION**

(57)     A method for carrying out a contactless payment transaction between a first computing device and a second computing device is described. The contactless payment transaction is to be provided for authorisation through a transaction processing system. Here, authorisation of the contactless payment transaction comprises verifying a secure result provided by the first computing device and generated by a cryptographic process. The method at the first computing device comprises the following steps. Firstly, the contactless payment transaction is initiated with the second computing device. A dummy secure result is then obtained. This dummy secure result is a unique value, has the format of a legitimate secure result, but is not generated by the cryptographic process. The contactless payment transaction with the second computing device is then completed using the dummy secure result. Authorisation of the wireless transaction is then possible if the dummy secure result can be used to reconcile the contactless payment transaction with a true secure result. To achieve this, the dummy secure result and information sufficient to establish a true secure result for the contactless payment transaction to enable the true secure result to be generated are provided by the first computing device such that the true secure result can be generated and provided with the dummy secure result. In due course, after matching with the dummy secure result, the transaction processing system uses this true secure result for authorisation of the contactless payment transaction. A suitable first computing device is also described, as is a method of interaction between a first computing device and a third computing device adapted to provide the true secure result.

FIG. 1

(52) Cooperative Patent Classification (CPC): (Cont.)
**H04L 67/59; H04W 4/80; H04W 12/009;**
**H04W 12/06; H04W 12/084;** G06F 2221/2123;
H04L 2209/56; H04L 2209/80; H04W 88/02

**Description**

Field of Disclosure

The present disclosure relates a contactless transaction. In embodiments, the disclosure relates to a contactless payment using a contactless payment protocol.

Background to Disclosure

Wireless technologies such as radio-frequency identification (RFID) and near field communication (NFC) are used in a variety of contexts for short range, and typically rapid, interactions between one electronic device and another over a short-range wireless channel. Such arrangements are very widely used for contactless payment from a user device (such as a payment card that can be used as a proximity card, or another payment device such as an NFC-enabled mobile telephone) to a point of sale (POS) terminal.

Contactless payments are generally performed according to contactless EMV specifications (these standards are maintained by EMVCo, and they may be found at emvco.com) - the current version of these specifications is 2.10, published on 29th March 2021. EMV standards generally implement ISO/IEC 7816, but ISO/IEC 14443 is also relevant for contactless cards).

For security and for the convenience of the parties, it is desirable for contactless payment interactions to be performed quickly, typically within 500ms at most. This may prove challenging if the payment interaction requires significant processing, as may be the case when a complex calculation is required to produce a cryptographic result necessary to make the interaction secure. As security requirements will typically increase over time as new security challenges appear, the complexity of such calculations will typically increase. This may be too challenging to achieve, or to achieve reliably, on a payment device such as a mobile telephone. Additional services - for example, cloud-based cryptography services - have become available, but engaging with such services will generally introduce latency as there may be both a communication lag and a handshake required to ensure secure communication between the service and any device using the service.

It would be desirable to be able to achieve secure wireless interactions between devices reliably at high speed, even in situations where one of the devices has a processing capability that limits its ability to produce cryptographic results at high speed.

Summary of Disclosure

In a first aspect, the disclosure provides a method for carrying out a wireless transaction between a first computing device and a second computing device for authorisation through a transaction processing system, the method comprising at the first computing device: establishing a secure network connection with a third computing device; initiating the wireless transaction with the second computing device; providing information for performance of a security protocol for the transaction to the third computing device over the secure connection, wherein performance of the security protocol includes determination of a secure result; receiving a dummy secure result from the third computing device; and completing the wireless transaction with the second computing device using the dummy secure result, such that for authorisation of the wireless transaction the dummy secure result can be used to reconcile the wireless transaction with a true secure result for the wireless transaction prepared by the third computing device and provided to the transaction processing system.

This approach has clear benefits in enabling a secure wireless transaction to be performed rapidly. The use of a dummy secure result allows the direct interaction between the first and second computing devices to take place rapidly, meeting any appropriate time threshold (this may be, for example, 500ms for a contactless transaction using EMV or a similar protocol). The separate preparation of the secure result for reconciliation at the transaction processing system allows a rapid transaction to be performed without compromising security.

In embodiments, the third computing device is an edge server. In such a case, the first computing device and the third computing device may communicate by cellular telecommunications, and the third computing device may be located at the base station of a telecommunications network.

In embodiments, initiation to completion of the transaction may take less than 0.5 seconds.

In embodiments, the wireless transaction may be a contactless payment transaction, and the first computing device may be a consumer computing device and the second computing device may be a point of sale terminal. In such a case, the secure result may be an application cryptogram for the contactless payment transaction. The first computing device may receive variables computed for a digital signature by the third computing device along with the dummy secure result, and may use the computed variables to digitally sign transaction data including the dummy secure result for provision to the second computing device. This digital signature may be an elliptic curve digital signature.

Establishing a secure network connection with the third computing device may comprise establishing a public key encryption scheme for the first computing device certified by a party trusted by the third computing device.

In a second aspect, the disclosure may provide a computing device comprising a memory and a suitably programmed processor, wherein the computing device is adapted to carry out the method of the first aspect as a first computing device.

Such a computing device may be a mobile telephone. The computing device may have a wallet application installed thereon, and may be programmed to use host card emulation for wireless interaction with a second computing device.

The computing device may comprises a wallet application adapted to carry out the performance of a contactless payment transaction - in such a case, the first computing device may be a consumer computing device and the second computing device may be a point of sale terminal, with the secure result being an application cryptogram for the contactless payment transaction. The first computing device may also receive variables computed for a digital signature by the third computing device along with the dummy secure result, and use the computed variables to digitally sign transaction data including the dummy secure result for provision to the second computing device - this digital signature may be an elliptic curve digital signature.

In a third aspect, the disclosure provides a method to support performance of a wireless transaction between a first computing device and a second computing device for authorisation through a transaction processing system, the method comprising at a third computing device supporting the performance of the first computing device: establishing a secure network connection with the first computing device; receiving information for performance of a security protocol for the transaction from the first device over the secure connection, wherein performance of the security protocol includes determination of a secure result; providing a dummy secure result to the first computing device; and obtaining a true secure result for the transaction, and providing the true secure result to a transaction processing system using the dummy secure result as an identifier for the transaction whereby the transaction processing system can reconcile the true secure result with the wireless transaction comprising the dummy secure result provided for authorisation.

In embodiments, the first computing device and the third computing device communicate by cellular telecommunications, and the third computing device is located at the base station of a telecommunications network. The wireless transaction may be a contactless payment transaction, and wherein the secure result is an application cryptogram for the contactless payment transaction. In embodiments, a credential for the secure result may be obtained from a distributed cryptographic service for providing credentials for digital transactions. In addition, variables for a digital signature for the wireless transaction may be computed, and the computed variables provided along with the dummy secure result to the first computing device to allow the first computing device to digitally sign transaction data. This digital signature may be an elliptic curve digital signature.

In a fourth aspect, the disclosure provides a computing device comprising a memory and a suitably programmed processor, wherein the computing device is adapted to carry out the method of the third aspect as a third computing device.

Such a third computing device may be located at the base station of a telecommunications network, with the first computing device and the third computing device communicating by cellular telecommunications. The computing device may be adapted to obtain a credential for the secure result from a distributed cryptographic service for providing credentials for digital transactions, with the computing device being adapted to access a node of the cryptographic service at the base station.

In a fifth aspect, the disclosure provides a method of verification of transaction details at a transaction processing system, the method comprising: receiving a transaction for verification originating from a point of sale terminal for contactless transactions; establishing that a secure result in the transaction is a dummy secure result and not a true secure result; using the dummy secure result as a transaction identifier to identify a message comprising the true secure result from an online processing system; and verifying the transaction details for the transaction using the true secure result.

This secure result may be an application cryptogram, and verification of the transaction details may comprise verification of a credential provided in the true secure result by using a distributed cryptographic service.

Description of Specific Embodiments

Specific embodiments of the disclosure are now described, by way of example, with reference to the accompanying drawings, of which:

Figure 1 shows a general approach adopted by elements of the disclosure in addressing technical problems associated with providing a secure wireless interaction between devices at high speed;
Figure 2 shows schematically a distributed transaction architecture using a four-party model;
Figure 3 illustrates elements of a complex distributed system adapted to implement the transaction architecture of Figure 2;
Figure 4 shows schematically an exemplary system for enabling digital transactions in the transaction architecture of Figures 2 and 3;
Figure 5 shows schematically elements available for use in the transaction architecture of Figure 2 where a 5G telecommunications architecture is available for use by a mobile device;
Figure 6 illustrates cryptographic processes for an exemplary contactless transaction;
Figure 7 illustrates a security architecture for a client computing device;
Figure 8 illustrates computational elements used for an existing digitized contactless transaction method;
Figure 9 indicates a flow before a transaction and Figure 10 indicates a flow during a transaction for the digitized contactless transaction method of Figure 8;

Figure 11 indicates a computing and communications architecture suitable for implementing embodiments of the disclosure;

Figure 12 illustrates schematically an arrangement for a distributed system for digital enablement of transactions;

Figure 13 illustrates a computing node of the arrangement of Figure 12 in more detail;

Figure 14 illustrates elements within the computing node of Figure 13;

Figure 15 indicates transaction flow in relation to operations performed by the node of Figure 13;

Figure 16 indicates an approach to key management used in the arrangement of Figures 12 to 15;

Figure 17 illustrates an exemplary approach to transaction identification;

Figure 18 illustrates an exemplary set of cryptographic mechanisms for use for digitized transactions in the arrangement of Figures 12 to 17;

Figure 19 illustrates a global model of key management with individual modes managed as shown in Figure 16;

Figure 20 illustrates a global model of monitoring associated with the key management model of Figures 16 and 19;

Figure 21 illustrates a contactless transaction flow according to an embodiment of the disclosure in a 5G telecommunications architecture;

Figure 22 illustrates in detail a set-up stage for the transaction flow of Figure 21;

Figure 23 illustrates in detail an additional transaction path for the transaction flow of

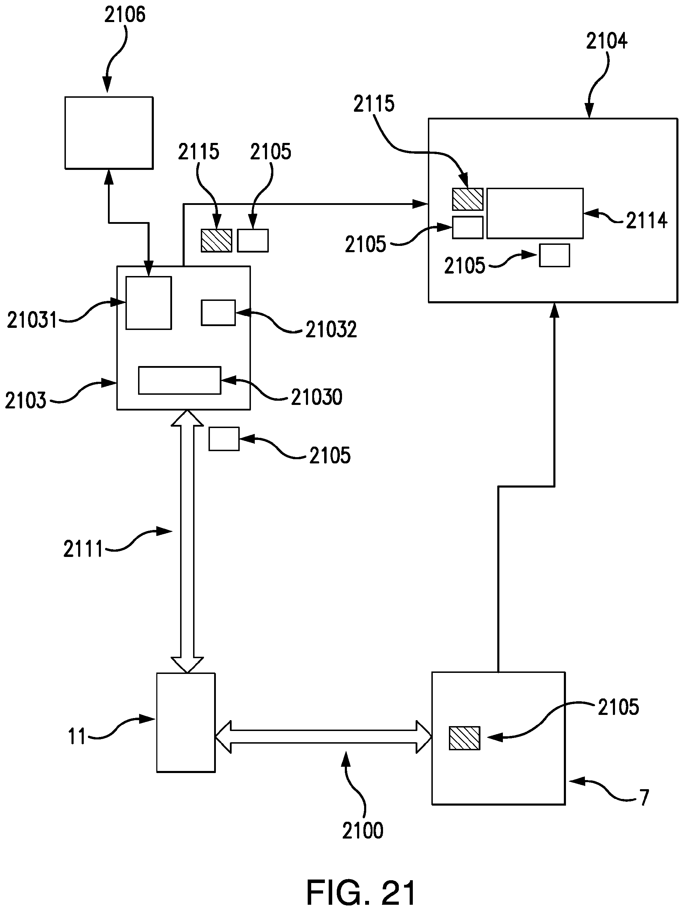

Figure 21 for providing transaction details for authorisation in the form used for a digital transaction;

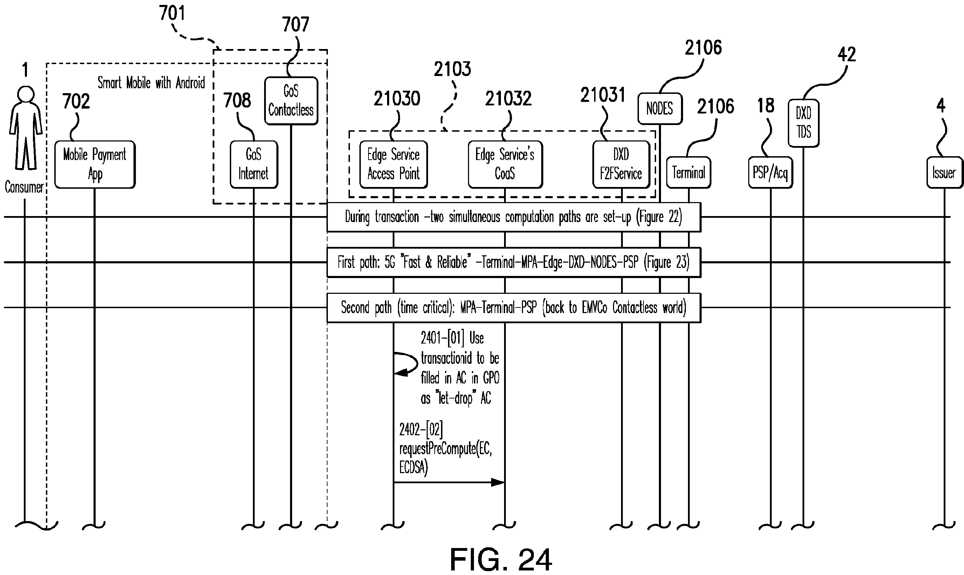

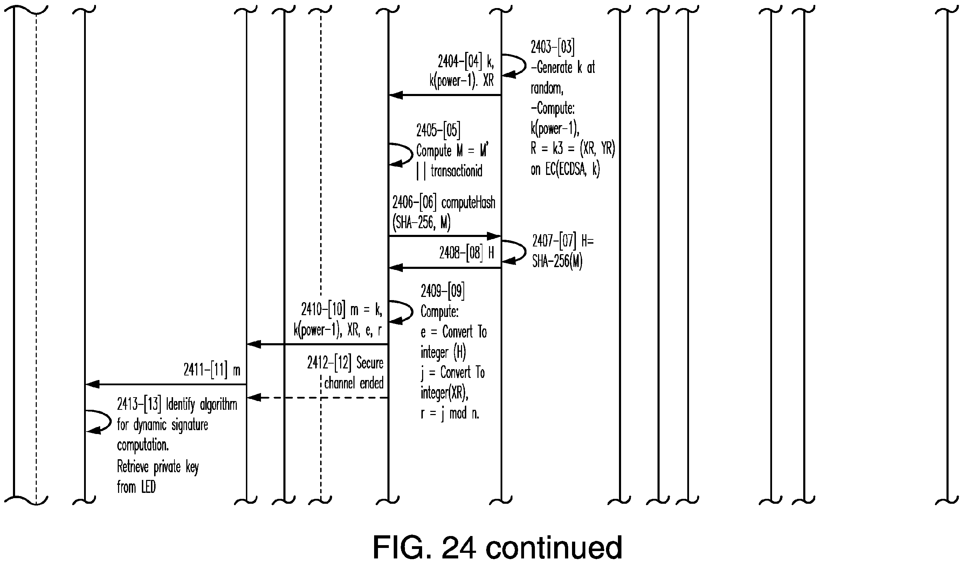

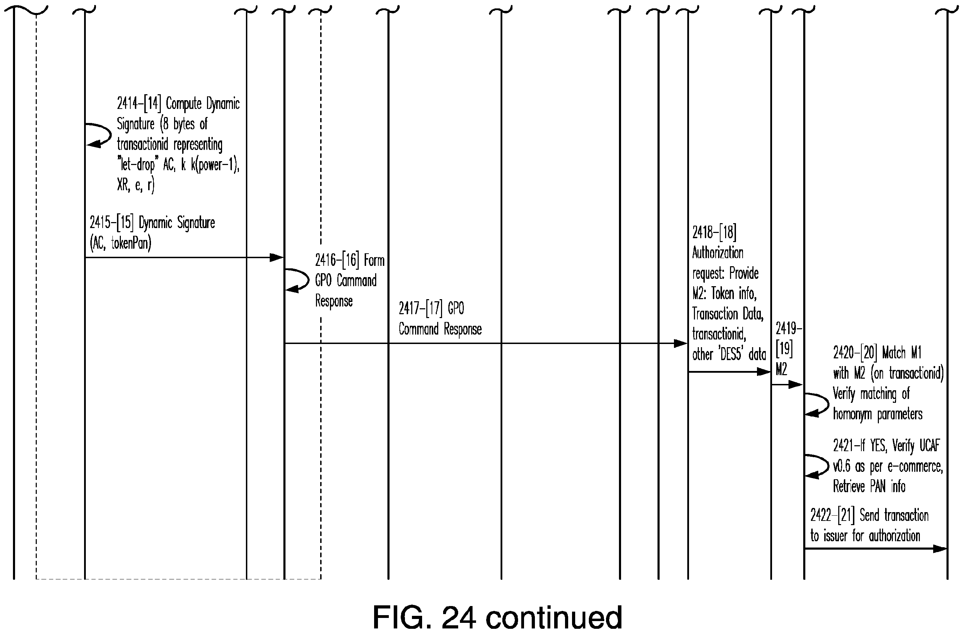

Figure 24 illustrates a modified contactless transaction interaction for the transaction flow of Figure 21;

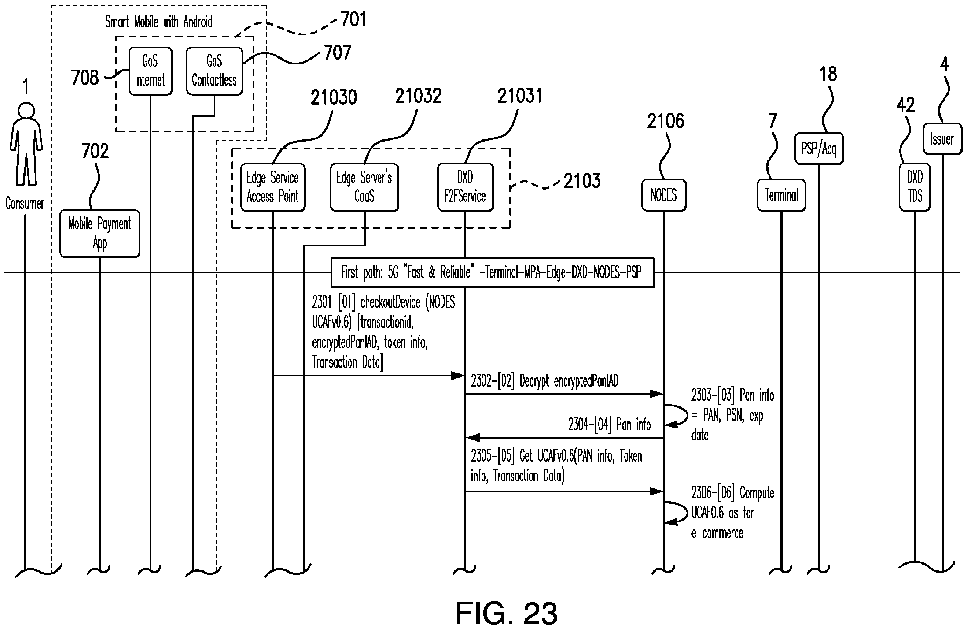

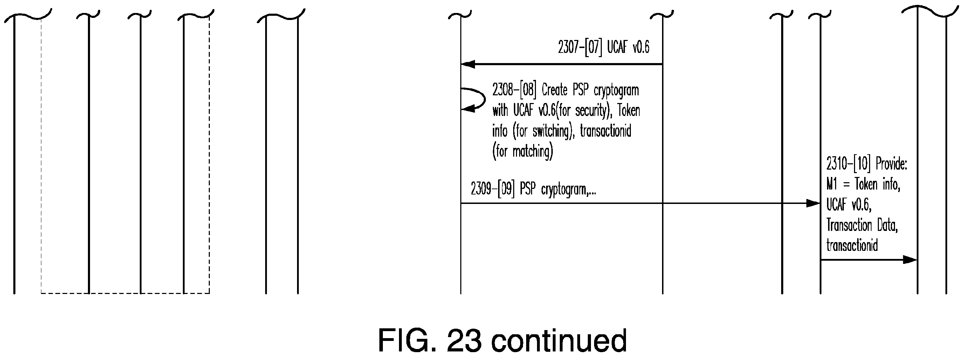

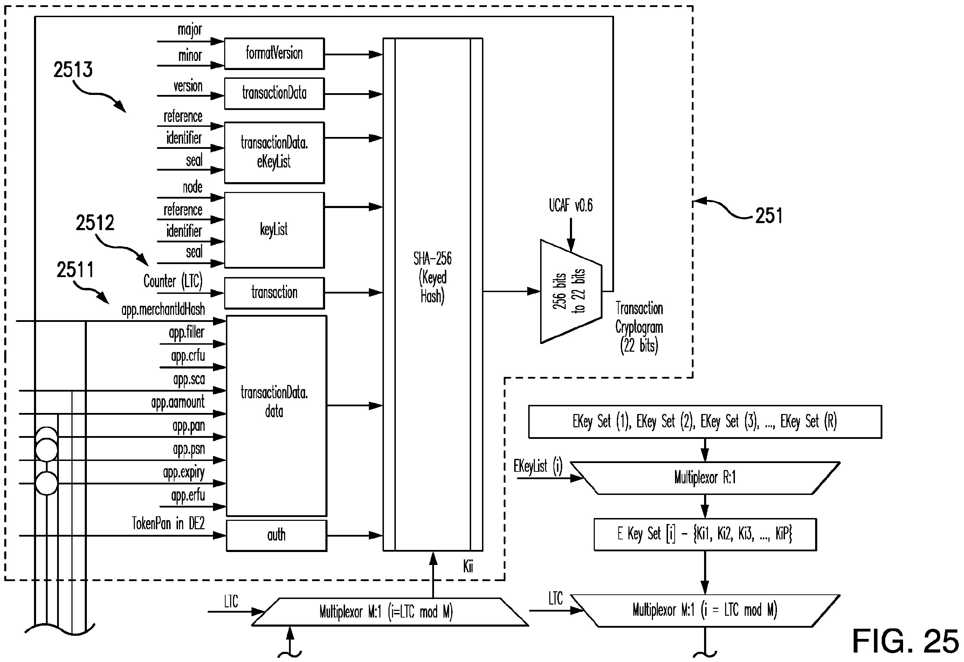

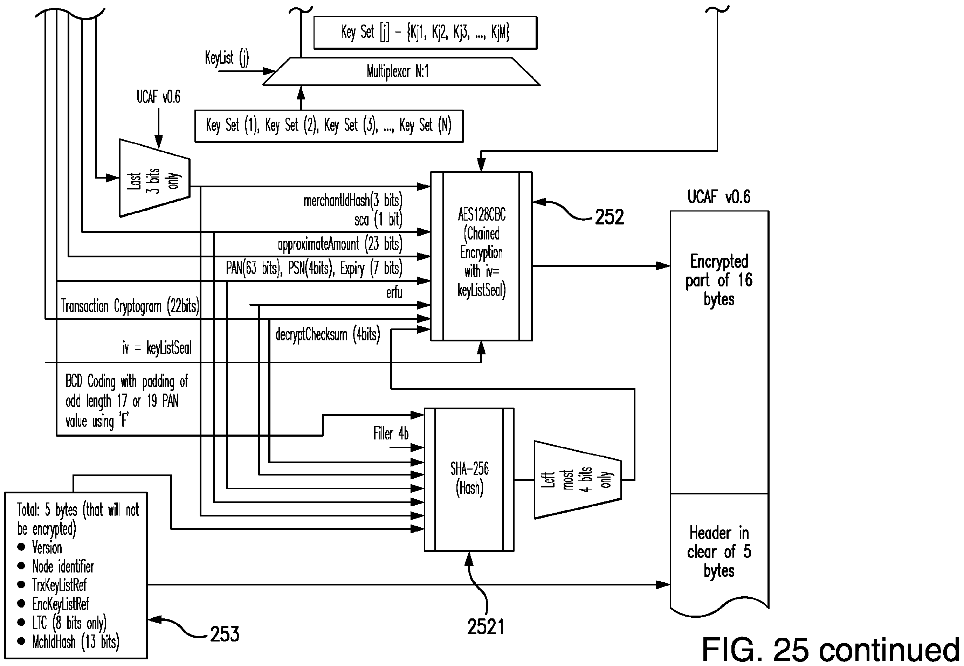

Figure 25 illustrates the structure of digital transaction information used in the additional transaction path of Figure 23;

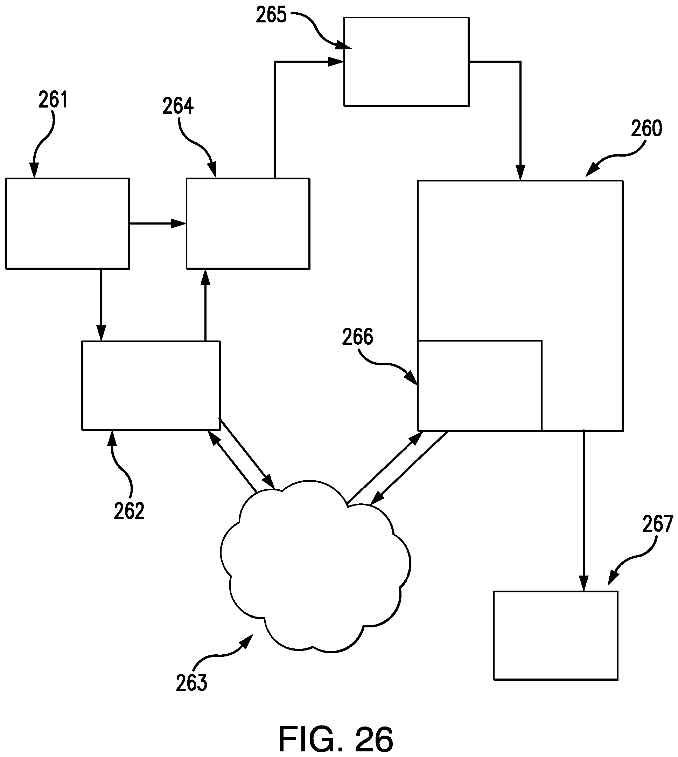

Figure 26 illustrates a transaction processing architecture incorporating the additional transaction path of Figure 23; and

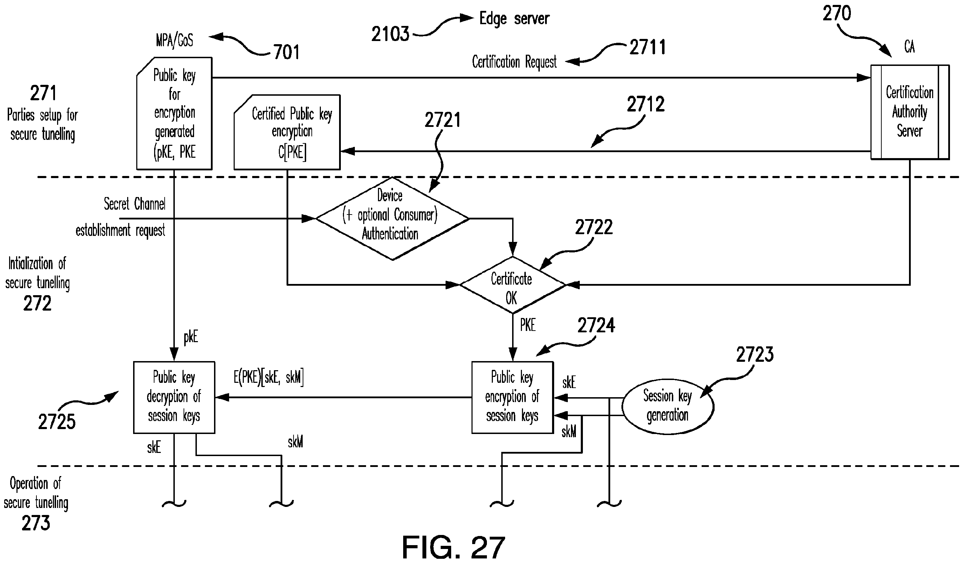

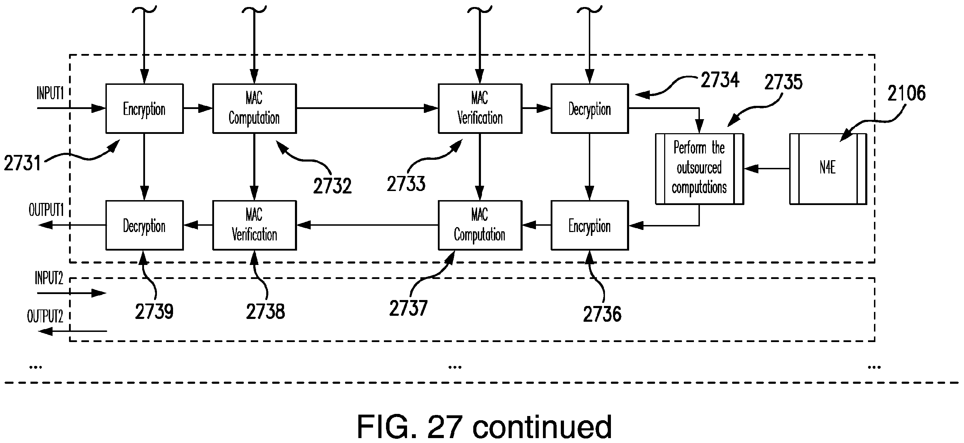

Figure 27 illustrates a process for establishing a secure tunnel between a payment device and an edge server for use in embodiments of the disclosure.

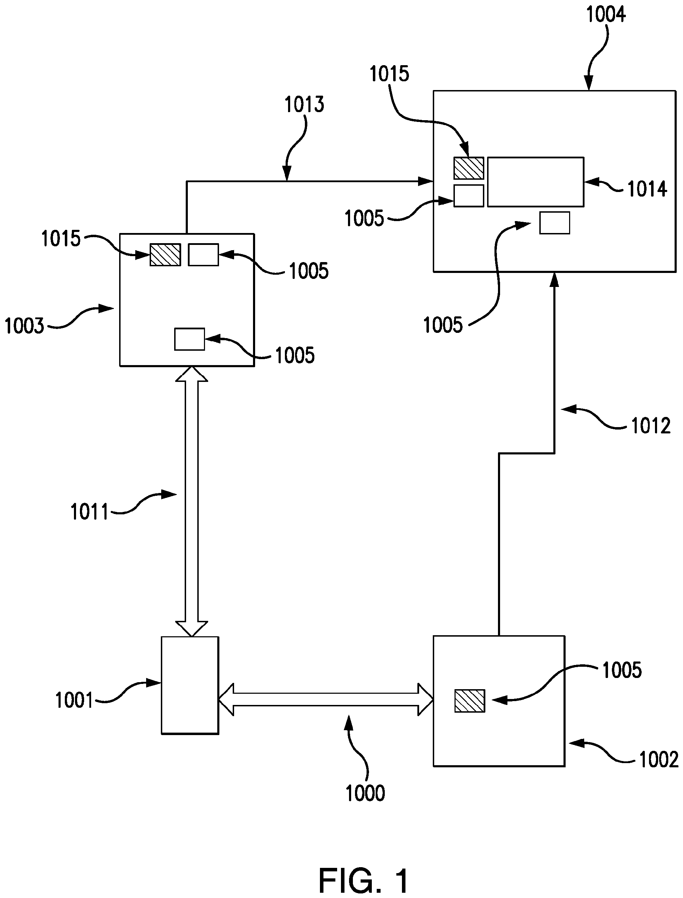

In general terms, the problem addressed by the disclosure and the solution employed by embodiments of the disclosure is illustrated in Figure 1. A wireless interaction 1000 is to be carried out between first device 1001 and second device 1002 - this wireless interaction 1000 is intended to be both rapid and secure. For the interaction to be secure, a security protocol needs to be performed between the first device 1001 and the second device 1002, and for purposes where a high level of security is required, this may require significant computational power at both the first device 1001 and the second device 1002. If the first device 1001 has limited computational power, this may prevent the interaction taking place both securely and rapidly.

The architecture shown in Figure 1 supports a wireless interaction 1000 which is both rapid and secure. The first device 1001 is here supported by a third device 1003 with which the first device 1001 has some form of networked connection - the third device 1003 has sufficient computational power to complete security protocol results.

In the architecture shown here, the wireless interaction 1000 involves the delivery of a secure result to the second device 1002, with the secure result being provided over communication channel 1012 to a verification system 1004. Here, there is a further pathway to the verification system 1004 from the third device 1003. The third device 1003 enables the rapid interaction in two ways. First of all, it provides a dummy secure result 1005 to the first device 1001, with the dummy secure result 1005 being communicated in the wireless interaction 1000 to the second device 1002. This dummy secure result is <u>not</u> the actual secure result required by the verification system 1004, but it has the form of the secure result and so will be accepted as formally correct by the security protocol, allowing the dummy secure result 1005 to be sent for verification over pathway 1012 between the second device 1002 and the verification system 1004. Such a dummy secure result 1005 can be generated very rapidly by the third device 1003 - it may be that much of the dummy secure result 1005 can even be precomputed - allowing the wireless interaction 1000 to be extremely rapid.

The dummy secure result 1005 of course would not be verified by the verification system 1004. It may, however, be used as an interaction identifier which can be used to recognise the true secure result for the interaction. This true secure result 1015 is generated by the third device 1003 (this does not need to be within the duration of the wireless interaction 1000 itself). The third device 1003 then sends <u>both</u> the true secure result 1015 (as the interaction secure result) <u>and</u> the dummy secure result 1005 (as an interaction identifier) to the verification system 1004 over a suitable channel 1013. A reconciliation system 1014 within the verification system 1004 recognises the dummy secure result 1005 as a dummy secure result and looks for a matching interaction identifier. When this is received from the third device 1003 the true secure result 1015 is treated by the verification system 1004 as the secure result for the wireless interaction 1000 for verification purposes.

While this approach can be applied to a variety of wireless interactions that need to be very rapid - for example, for secure access control or smart ticketing - it is particularly appropriate for contactless payment, where in many contexts interaction duration of 500ms or less is required, and the level of security required may be significant (particularly for higher value transactions). In this case, the wireless interaction 1000 may be a short-range wireless "tap and go" interaction, using a technology such as NFC. This approach is particularly appropriate where the second device 1002 is a POS terminal of some kind but the first device 1001 is a mobile telephone handset - this may not have sufficient computational power available for high-speed generation of a necessary secure result. However, such a telephone handset may be able to make a secure connection to a third device 1003 with much greater computational power, such as an edge server accessible as part of a 5G communication system. In this case, the edge server may be used to perform the function of generating both the dummy secure result 1005 and the true secure result 1015, communicating the dummy secure result 1005 back to the first device 1001 for use in the wireless interaction 1000, and also communicating the true secure result 1015 with the dummy secure result 1005 as identifier to the verification system 1004 (with the initial part of the suitable channel 1013 being a 5G connection to the edge server).

Embodiments will be described in more detail in the context of a transaction scheme. A suitable transaction scheme and infrastructure will first be described in more detail.

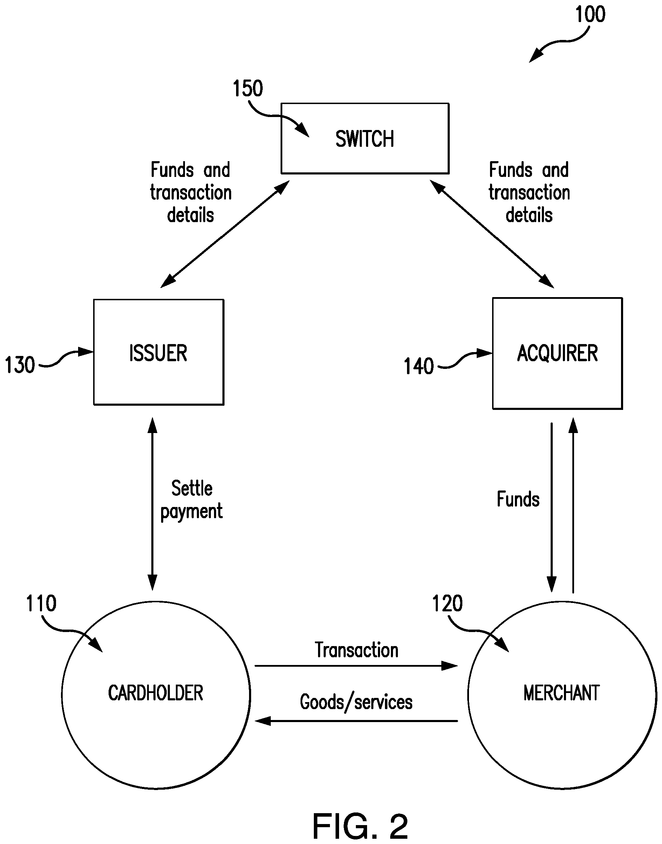

Figure 2 is a block diagram of a typical four-party model or four-party payment transaction scheme. The diagram illustrates the entities present in the model and the interactions occurring between entities operating in a card scheme.

Normally, card schemes - payment networks linked to payment cards - are based on one of two models: a three-party model or a four-party model (adopted by the present applicant). For the purposes of this document, the four-party model is described in further detail below.

The four-party model may be used as a basis for the transaction network. For each transaction, the model comprises four entity types: cardholder 110, merchant 120, issuer 130 and acquirer 140. In this model, the cardholder 110 purchases goods or services from the merchant 120. The issuer 130 is the bank or any other financial institution that issued the card to the cardholder 110. The acquirer 140 provides services for card processing to the merchant 120.

The model also comprises a central switch 150 - interactions between the issuer 130 and the acquirer 140 are routed via the switch 150. The switch 150 enables a merchant 120 associated with one particular bank acquirer 140 to accept payment transactions from a cardholder 110 associated with a different bank issuer 130.

A typical transaction between the entities in the four-party model can be divided into two main stages: authorisation and settlement. The cardholder 110 initiates a purchase of a good or service from the merchant 120 using their card. Details of the card and the transaction are sent to the issuer 130 via the acquirer 140 and the switch 150 to authorise the transaction. The cardholder 110 may have provided verification information in the transaction, and in some circumstances may be required to undergo an additional verification process to verify their identity (such as 3-D Secure in the case of a remote transaction). Once the additional verification process is complete the transaction is authorized.

On completion of the transaction between the cardholder 110 and the merchant 120, the transaction details are submitted by the merchant 120 to the acquirer 140 for settlement.

The transaction details are then routed to the relevant issuer 130 by the acquirer 140 via the switch 150. Upon receipt of these transaction details, the issuer 130 provides the settlement funds to the switch 150, which in turn forwards these funds to the merchant 120 via the acquirer 140.

Separately, the issuer 130 and the cardholder 110 settle the payment amount between them. In return, a service fee is paid to the acquirer 140 by the merchant 120 for each transaction, and an interchange fee is paid to the issuer 130 by the acquirer 140 in return for the settlement of funds.

In practical implementations of a four-party system model, the roles of a specific party may involve multiple elements acting together. This is typically the case in implementations that have developed beyond a contact-based interaction between a customer card and a merchant terminal to digital implementations using proxy or virtual cards on user computing devices such as a smart phone.

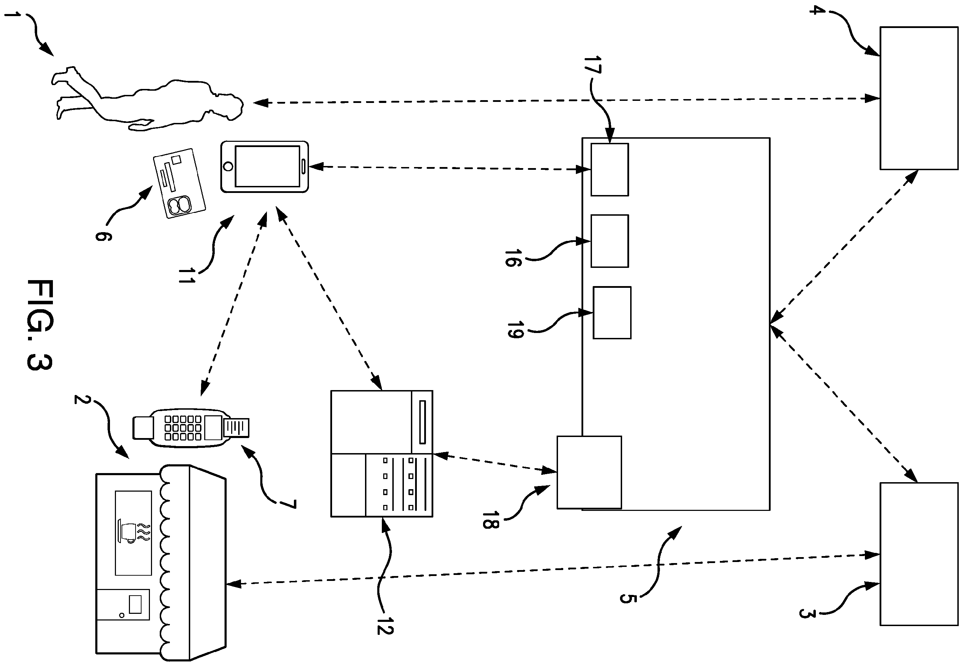

Figure 3 shows an architecture appropriate for interaction between a cardholder and a merchant. This Figure shows a general-purpose architecture for reference, but it shows elements of an architecture used when a cardholder carries out a remote transaction with a merchant server.

For a conventional transaction, a cardholder 1 will use their payment card 6 - or a mobile computing device such as smartphone 11 adapted for use as a contactless payment device - to transact with a POS terminal 7 of a merchant 2. However, in embodiments relevant to the present disclosure, the cardholder will use his or her computing device - which may be any or all of a cellular telephone handset, a tablet, a laptop, a static personal computer or any other suitable computing device (here cellular telephone handset or smartphone 11 is shown) - and other computing devices such as a smart watch or other wearable device may also be used) - to act either as a proxy for a physical payment card 6 or as a virtual payment card operating only in a digital domain. The smartphone 11 may achieve this with a mobile payment application and a digital wallet, as described below. The smart phone 11 can use this to transact with a merchant POS terminal 7 using NFC or another contactless technology, or to make a payment in association with its wallet service as discussed below. To make a remote transaction, the smartphone 11 may also be able to interact with a merchant server 12 representing the merchant 2 over any appropriate network connection, such as the public internet - the connection to the merchant may be provided by an app or application on the computing device.

The transaction scheme infrastructure (transaction infrastructure) 5 here provides not only the computing infrastructure necessary to operate the card scheme and provide routing of transactions and other messaging to parties such as the acquirer 3 and the issuer 4, but also a wallet service 17 to support a digital wallet on the cardholder computing device, and an internet gateway 18 to accept internet-based transactions for processing by the transaction infrastructure. This internet gateway 18 may be provided by a payment service provider, and in some arrangements the merchant 2 may interact with an internet gateway rather than directly with the acquirer. In other embodiments, the wallet service 17 may be provided similarly by a third party with an appropriate trust relationship with the transaction scheme provider. To support tokenization, a token service provider 19 is present (again, this is shown as part of transaction infrastructure 5 but may be provided by a third party with appropriate trust relationships), and the transaction scheme infrastructure provides a digital enablement service 16 to support the performance of tokenized digital transactions, and to interact with other elements of the system to allow transactions to be performed correctly - this digital enablement service may include other elements, such as token service provision.

For a tokenized transaction, the transaction is validated in the transaction scheme by mapping the cardholder token to their card PAN, checking the status of the token (to ensure that it is in date and otherwise valid) and any customer verification approach used. This allows the issuer to authorise the transaction in the normal manner.

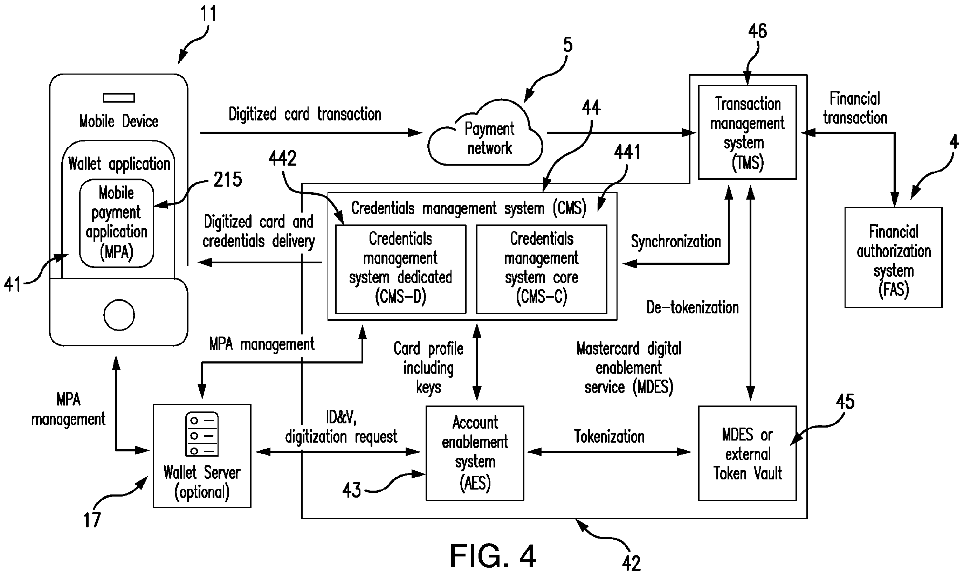

Figure 4 shows elements of a transaction infrastructure to support digitized payments from a mobile device in more detail. This Figure shows as a specific example the applicant's Mastercard Cloud-Based Payment (MCBP) architecture-this illustrates how the architecture is used to support a mobile payment application 215 on a mobile device (such as smartphone 11) - here the mobile payment application 215 is shown as contained within a wallet application or digital wallet 41. Such a digital wallet 41 may communicate with a wallet server 17 to allow management of the mobile payment application, and it also can be used to request digitization of a payment card 6 to be used by the mobile device 11 (whereby the digitized payment card is stored in / associated with the digital wallet 41).

The Mastercard Digital Enablement Service (MDES) 42 performs a variety of functions to support mobile payments and digitized transactions. As indicated above, the MDES 42 is exemplary only - other embodiments may use digitization, tokenization and provisioning services associated with other transaction processing infrastructures, for example. The wallet server 17 is not a part of the MDES 42 - and need not be present, for example if the mobile payment application 215 is not embedded within a digital wallet 41 - but acts as an interface between the mobile device 11 and the MDES 42. The MDES 42 also mediates tokenized transactions so that they can be processed through the transaction scheme as for conventional card transactions. The following functional elements shown within the MDES 42: the Account Enablement System (AES) 43, the Credentials Management System (CMS) 44, the Token Vault 45, and the Transaction Management System (TMS) 46. These will be described briefly below.

The Account Enablement System (AES) 43 is used in card digitisation and user establishment. It will interact with the mobile payment application (here through the wallet server 17) for card digitisation requests and will populate the Token Vault 45 on tokenization and will interact with the CMS 44 to establish a card profile with associated keys for digital use of the card.

The Credentials Management System (CMS) 44 supports management of cardholder credentials and is a key system within the MDES 42. The core system 441 manages synchronisation with the transaction system as a whole through interaction with the TMS 46 and manages the channel to the AES 43. The dedicated system 442 provides delivery of necessary elements to the mobile payment application such as the digitized card and credentials and keys in the form needed for use. This system may also interact with the wallet server 17 for management of the mobile payment application.

The Token Vault 45 - which is shown here as within the MDES 42, but which may be a separate element under separate control - is the repository for token information including the correspondence between a token and the associated card. In processing tokenized transactions, the MDES 42 will reference the Token Vault 45, and tokenization of a card will result in creation of a new entry in the Token Vault 45.

Transaction Management System (TMS) 46 is used when processing tokenized transactions. If a transaction is identified by the transaction scheme as being tokenized, it is routed to the TMS 46 which detokenizes the transaction by using the Token Vault 45. The detokenized transaction is then routed to the issuer (here represented by Financial Authorisation System 47) for authorisation in the conventional manner. The TMS 46 also interacts with the CMS 44 to ensure synchronisation in relation to the cardholder account and credentials.

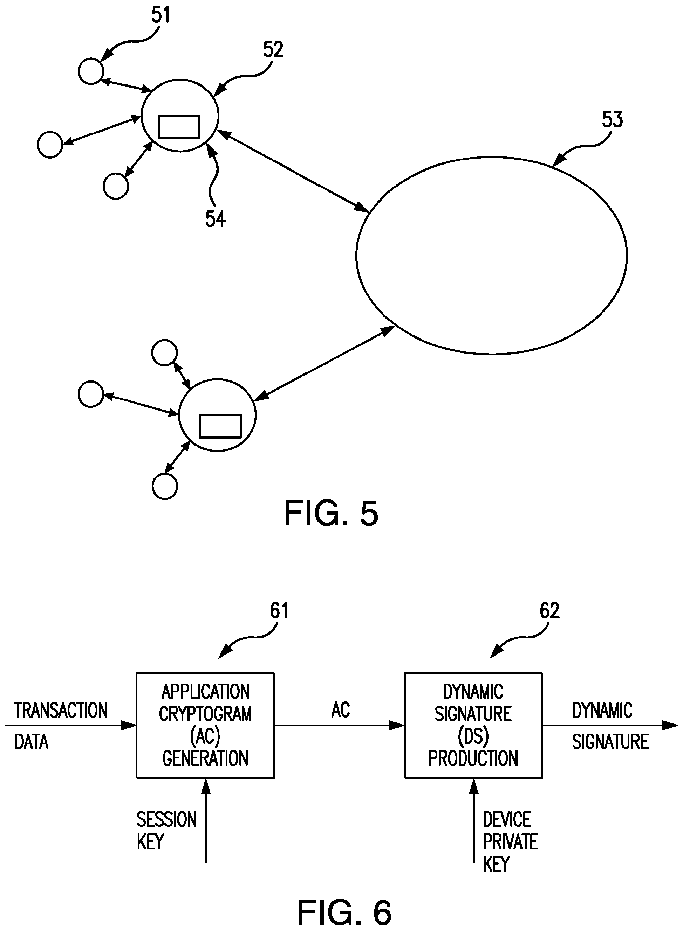

Embodiments of the present disclosure relate particularly to contactless transactions and their digitization, and to implementation in 5G networks. Relevant features of 5G networks will now be described with reference to Figure 5, and an existing approach to digitization of contactless transactions will then be described with reference to Figures 6 to 10.

Figure 5 shows a cellular communications network in which user equipment 51 (typically such "user equipment" is a mobile telephone handset, but the term is the generic one for the end stage device of such a network) connects to a radio area network 52, and through the radio area network 52 to the core network 53 of the telecommunications system provider. This approach is generally used for any radio access technology (such as GSM, UMTS and LTE), but 5G is distinguished by its support for multi-access edge computing (MEC). This provides a distributed computing environment for application and service hosting close to cellular subscribers for extremely rapid response. This may be achieved by using an MEC application server 54, typically integrated with the radio area network 54 for example by deployment at the base station. The MEC application server 54 can be used to host applications to provide services to customers - an MEC application server is typically a multitenancy run-time and hosting environment and while the hardware may be considered part of the cellular telecommunications network, third party services may be hosted on this hardware for interaction with user equipment. Figure 6 illustrates cryptographic processes - specifically, the cryptographic payment proof computation - for an exemplary contactless transaction. This consists of the combination of results from two cryptographic primitives: the generation 61 of an application cryptogram (AC), and the production 2 of a digital signature (DS).

The application cryptogram is generated using an appropriate algorithm, typically a block cipher such as AES or SM4 in CBC mode. This operates on transaction data using a session key that is unique per transaction (the payment application has access to an application transaction counter - ATC - controlled by the payment device on behalf of the issuer) per active device (associated with a token PAN). The transaction data, which is provided by the terminal, includes an unpredictable number (UN). When received in the payment processing system for authorisation via the terminal and the PSP/Acquirer, the TMS (as described in Figure 4 above) verifies it to counter transaction counterfeit attempts such as replay attacks - the TMS has the information used to provide the session key and is able to recompute it.

The digital signature is constructed using a digital signature algorithm such as ECDSA or SM2. This operates on the AC and on account information (the token and the expiry date) - this provides proof for the contactless terminal that the digital card is authentic. This is an active protection against other forms of attack (such as edge device attacks, which aim to substitute the AC with a fake value).

More than one type of contactless flow is possible. For example, there may be a "fast flow" and a "slow flow" that apply in different circumstances. For a nonlocal card, it may be desirable to implement a full transaction flow (implementing this in EMV, the cryptographic proof may be provided in response to a First Generate AC command). In use, this may require the user to "tap and hold" the payment device for a longer period of time - for example, a few seconds - to allow the whole protocol to be carried out when the payment device and the terminal are in proximity to each other.

For a local card where it is desirable for the transaction to be rapid - for example, at a ticket gate to a rail system during rush hour - a "fast flow" may be implemented. In this case the return of the cryptographic proof may take place earlier during the Get Processing Options command. These transactions are designed to take place in a fraction of a second - typically no more than 500ms between the terminal connecting with the payment device and the provision of the final signed response to the terminal.

This may require the computation of the cryptographic proof to take place in 150ms or less.

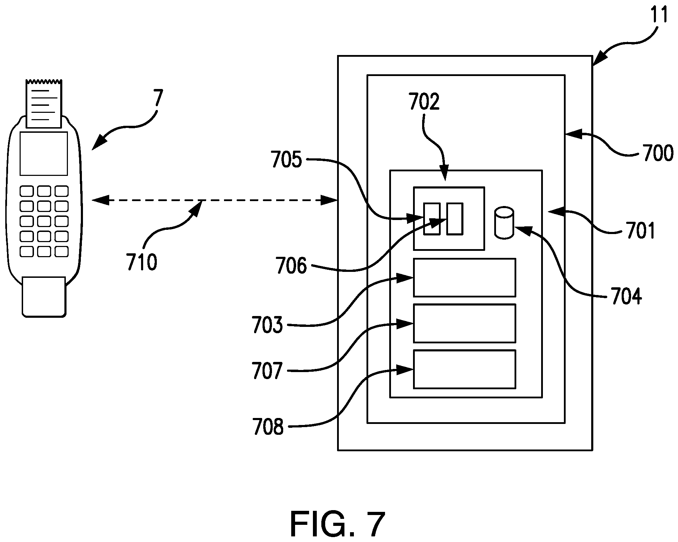

Figure 7 indicates an appropriate architecture for a payment device comprising a "digital card" hosted on a user computing device such as a mobile telephone handset 11. Some implementations of such digital cards use a physical secure element (SE) - ApplePay is an example of this - but the embodiment described here uses a software solution (such as is used in, for example, devices running an Android operating system). The user device here has a Rich Execution Environment (REE) 700 in which applications generally run, and a Host Card Emulator (HCE) within it to provide digital wallet functionality. Host Card Emulation is widely used on Android architectures to support such functionality and to allow NFC based interaction between devices. This allows secure card hosting without reliance on a physical secure element (which is in most architectures impractical, as the only physical secure element is a SIM under the control of the Mobile Network Operator without effective access by other parties). In this case, there is a wallet application 701 in the REE (termed here the "Go Shopping" or GoS application in examples) which includes one or more mobile payment applications 702 (MPA) to provide payment functionality. Such an application may provide online shopping capability, or a blended online and bricks-and-mortar experience, but this is not considered further here - the present disclosure relates to face-to-face contactless payment at a point-of-sale (POS) terminal 7.

As shown in Figure 7, the Go Shopping application comprises the following elements:

• A Consumer Device Cardholder Verification Method (CD-CVM) element 703. This needs to have access to a local authenticator operating in the REE (a PIN entered over a keyboard, a fingerprint reader, facial recognition technology etc.). CD-CVM is required for two factor authentication (particularly for two factor - strong consumer authentication (2F-SCA)).

• A Mobile Payment Application (MPA) 702. Here this will typically use software obfuscation techniques (such as white-box cryptography) to implement the following functionality in software:

  ○ A Local Encrypted Database (LDE) 704 in which the secret key for AC generation and the associated Application Transaction Counter (ATC) are stored along with the private key for digital signature. These are stored in an encrypted format until needed for computation of the AC by the MPA and for (dynamic) digital signature.

      ◦ A MAC algorithm 705 for AC generation. This may be by symmetric key encryption, chaining in CBC mode of the AC input data.

      ◦ A dynamic signature algorithm 706 for dynamic signature production - this will be an asymmetric key algorithm.

- A contactless interface (here "Go Shopping Contactless") 707 for contactless communication - in this specific case, by an NFC connection 710 with the terminal 7.

- An internet interface (here "Go Shopping Internet") 708 for network communication to external computing resources, such as the Mastercard Digital Enablement Service - as will be noted below, in embodiments of the disclosure this may be used to contact computational resources available through 5G networking.

As described above, an exemplary digital transaction technology using tokenization is the applicant's MCBP, described in Figure 4 above. Examples that follow will be described in the context of MCBP, though the technical solutions described are relevant to other digital transaction architectures. The following features of MCBP are relevant to implementation here:

- ISO algorithms are current used for cryptography (3-DES/AES, RSA/EC DSA, SHA-256), though alternatives with equivalent functionality could be used in alternative implementations (such as SM4 for symmetric encryption, SM2 for digital signature, SM3 for hashing).
- EMVCo key derivation schemes are used with a cloud-based server system - CMS, also referred to as CMS-D where the card system is dedicated to a particular wallet provider. The MPA needs to connect from time to time to the CMS/CMS-D to replenish its LED with fresh session keys for AC production in future transactions.

      ◦ As software security is used to protect session keys, these are typically uploaded only in limited numbers and late to minimise exposure - though for a contactless transaction to be possible, the session key must already have been loaded (it will not be possible to do this during a transaction, as the transaction process is typically significantly shorter than the key uploading process).

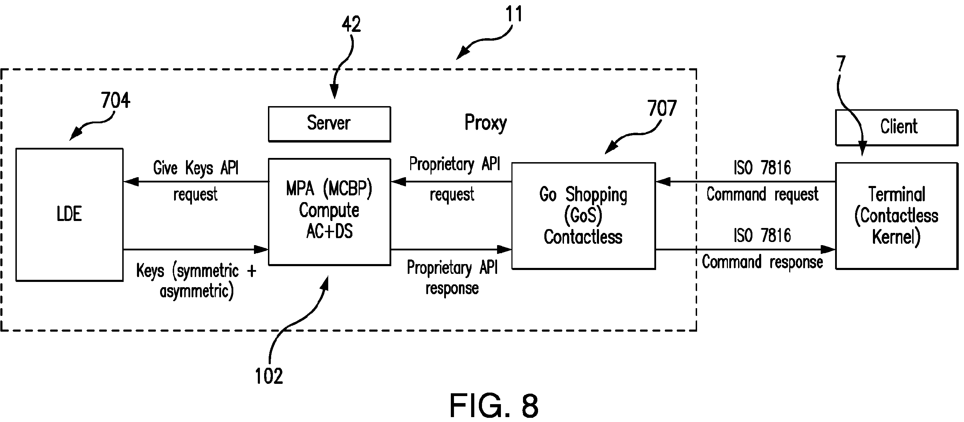

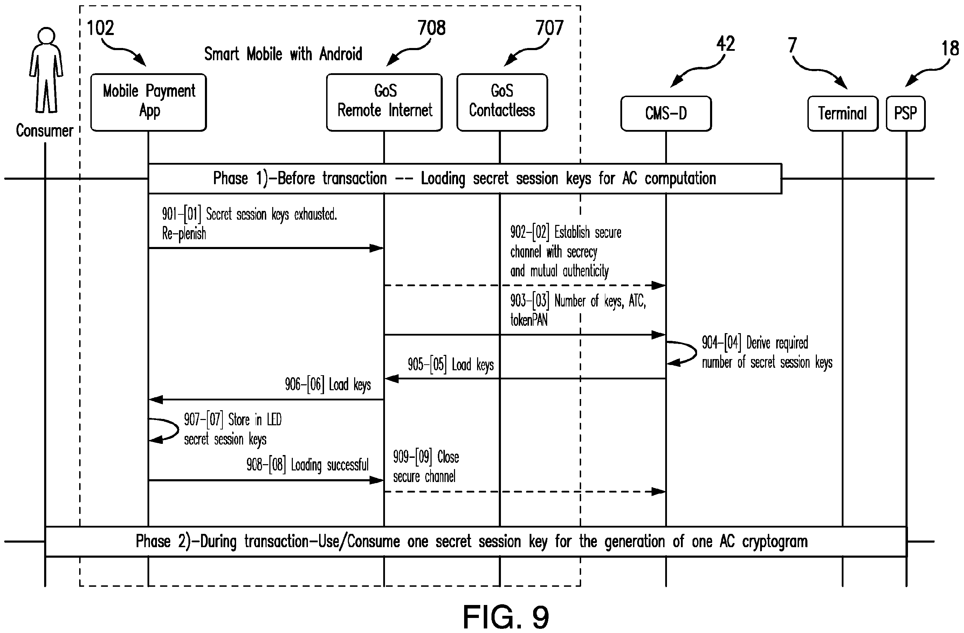

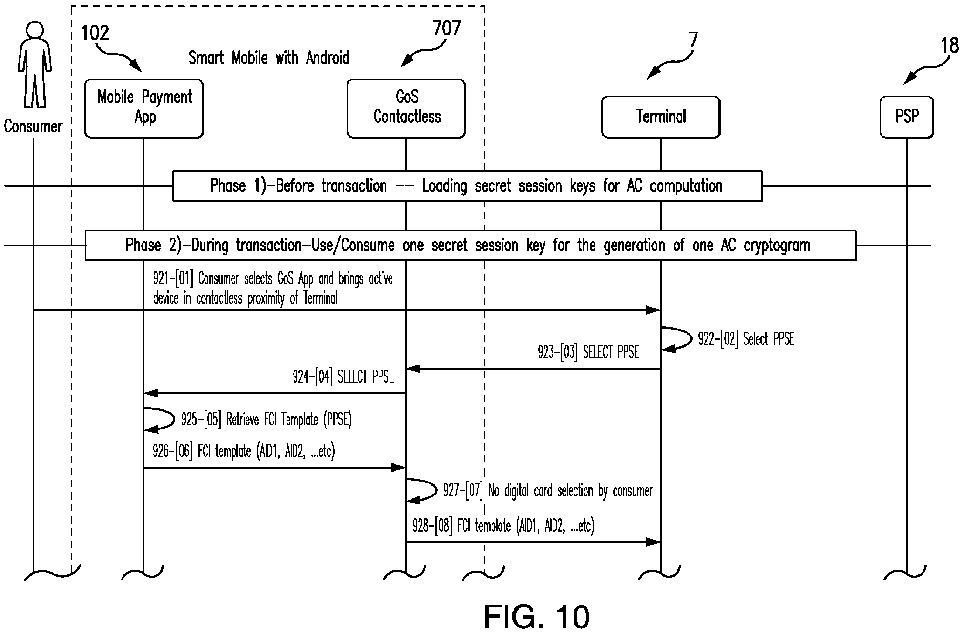

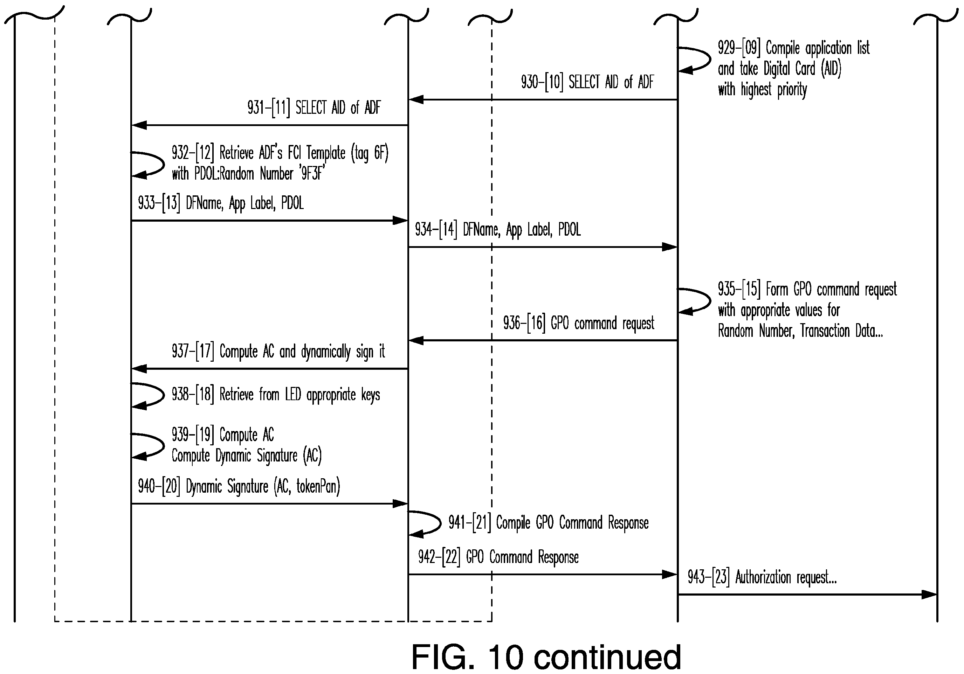

Interaction between these elements in performing a transaction according to a "fast" flow is shown at a high level in Figure 8, with pre- and in-transaction flows shown in Figures 9 and 10 respectively. As shown in Figure 8, when communication is established between the user device 11 and the terminal 7, a command (using an ISO 7816 standard) is sent from the terminal 7 to the client - the transaction details are provided from the terminal to the device in this way. This command is received by the Go Shopping wallet application 707, which makes a request (which may be under any appropriate protocol - typically this will be through a proprietary API) to the MPA 102 to perform the necessary cryptographic functions (AC and DS generation). The MPA 102 will previously been provisioned with keys for this purpose through MCBP 42, and it will have stored these in the LDE. The MPA will then retrieve a set of these previously stored keys by making a request to the LDE 704, and it will use these to compute the AC and to provide the dynamic digital signature. These are provided to the Go Shopping wallet 707, and hence to the terminal 7 using an ISO 7816 command response.

Such a flow is shown in detail in Figures 9 and 10. Figure 9 shows the pre-transaction flow in which secret session keys for AC computation by the MPA are loaded into the LDE from the CMS-D. When the session keys available to the MPA are exhausted 901 (possibly instead of complete exhaustion this step could be triggered with one or two keys left) the MPA begins the replenishment process. The MPA communicates with the wallet application which establishes 902 a secure channel over an internet connection with the CMS-D - this channel is secure and there is mutual authentication. The wallet application then requests 903 a number of keys, providing the current ATC and the tokenPAN for the tokenised card. These keys are then derived 904 by the CMS-D and loaded 905 to the wallet application over the secure channel. The keys are then loaded 906 by the wallet application to the MPA, and stored 907 in encrypted form in the LDE. On confirmation that the loading is successful 908, the secure channel is closed 909, ending the replenishment phase.

In the transaction phase as shown in Figure 10, the transaction is started by the consumer opening or otherwise activating the wallet application and bringing the payment device into proximity 921 with the terminal to establish communication and begin the contactless transaction. As is normal for an EMV contactless transaction (the terminology used throughout this paragraph is standard EMV terminology), the first step is to establish a PPSE (Proximity Payment System Environment) for the transaction - this is initiated 922 by the terminal, with a SELECT PPSE command sent 923 to the wallet application and communicated 924 to the MPA, which retrieves 925 its template (FCI - File Control Information - template) for such a transaction and provides 926 this to the wallet application. The wallet application notes 927 that there will be no card selection process by the consumer - as this is a rapid contactless transaction that needs to operate according to established defaults - and provides 928 a list of payment applications by application identifier (AID) to the terminal, with the "fast flow" application heading the list. The application list is prioritised 929 by the terminal, and here it is assumed that fast flow is selected and this is communicated 930 to the wallet application, and hence 931 to the MPA. The MPA then retrieves 932 the FCI template and establishes what information is needed from the terminal and in what form and provides 933 this to the wallet application as a Processing Data Objects List (PDOL), which is sent 934 to the terminal. The terminal prepares 935 this information for a Get Processing Options (GPO) command with the information needed by the MPA to prepare an AC - this will include the transaction data and a random number and potentially other information. The GPO command is sent 936 to the wallet application and on 937 to the MPA, which identifies the requested algorithm specified and retrieves the necessary key 938, then computes the AC and further produces the dynamic signature 939 as indicated above, with the dynamic signature comprising the AC being sent 940 to the wallet application. The wallet application compiles 941 and sends 942 a response to the GPO command to the terminal, which then sends an authorization request 943 in the standard manner for an EMV transaction.

The approach set out above uses existing technological arrangements, and has certain drawbacks. One is the reliance on the LDE as the secure element (both for symmetric and private keys, but also for local authenticator linked sensitive data such as a reference PIN or biometric) - there is some risk, particularly if prolonged access to the device is obtained, of a reverse engineering attack. The digital payment system is also constrained: the TMS (Transaction Management System) may be limited in the number of transactions that can be processed as processing requires access to a centralized token vault; the CMS-D may not be effectively scalable, particularly if there are a large number of devices to provision which are also geographically dispersed; and the key derivation approach of EMV can lead to the creation of a very large number of keys which will not all be used effectively.

As noted above, existing "fast" arrangements rely on pre-provisioning of the payment device with secret keys so that contactless operation need not rely on any external connection. In a 5G environment, however, the availability of fast local edge servers allows "external" computation with very low latency. Embodiments of the present disclosure exploit this aspect of a 5G architecture to realise new models of contactless interaction which can meet timing requirements without needing to make operational compromises of the kind indicated above. This may be paired with a decentralized version of the digitized payment infrastructure of Figure 4 such as is described in the applicant's earlier WO2022/046330 A1, for example. This decentralized scheme, termed NODES, is described in further detail below, but is briefly referenced in the immediately following discussion of transaction flows that can be achieved using a 5G computational architecture.

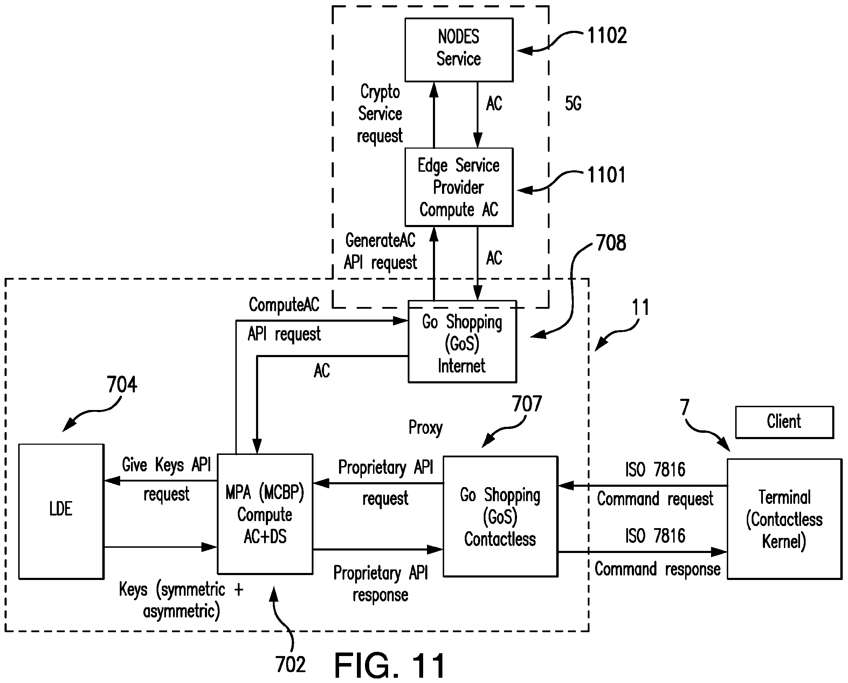

Figure 11 shows how the contactless transaction process and architecture of Figure 8 may be enhanced in a 5G computational and communications architecture. The contactless interaction between the payment device 11 and the terminal 7 follows the same ISO 7816 approach as before, mediated by the wallet contactless application 707, but there is now another route which the mobile payment application 702 can take to support rapid computation other than simply rely on resources preloaded into the LDE 704 - it can use a path (here mediated through the wallet internet application 708) to access an edge service provider 1101 to provide computing services. This edge service provider may, for example, be implemented in an MEC application server provided as part of the 5G infrastructure. Cryptographic services for the edge service provider may be provided by a cryptographic service provider 1102. This may, for example, be a node of a NODES system as described further below. This may again be located within the 5G infrastructure (and possibly also implemented by a MEC application server, even the same MEC application server as for the computation), but may be a separate computing entity with a secure channel to the edge service provider 1101. Where both edge service provider 1101 and the cryptographic service provider 1102 are located in the edge, rather than in the cloud, there is the possibility of sufficiently rapid AC calculation to meet "fast flow" requirements while not needing to rely on what is present or pre-loaded in the payment device itself.

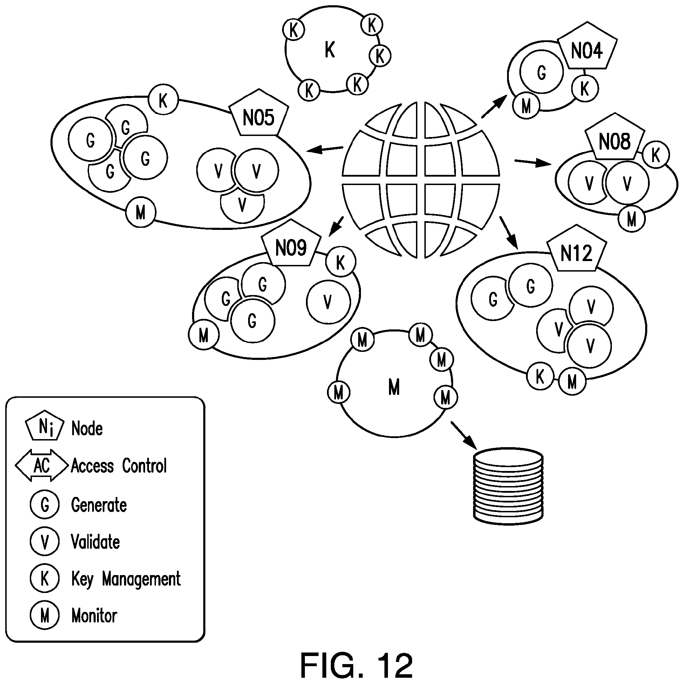

The NODES infrastructure has been described in earlier cases - for example, the applicant's earlier WO2020/247093 and WO2022/046330, the disclosure of which is here incorporated to the extent applicable by law - as an approach to enabling aspects of a system for the performance of a digitized transaction - and in particular the management of credentials - to be decentralised. This is done by replacing a central node with a decentralised set of nodes each capable of credential management, as is shown in Figures 12 to 21.

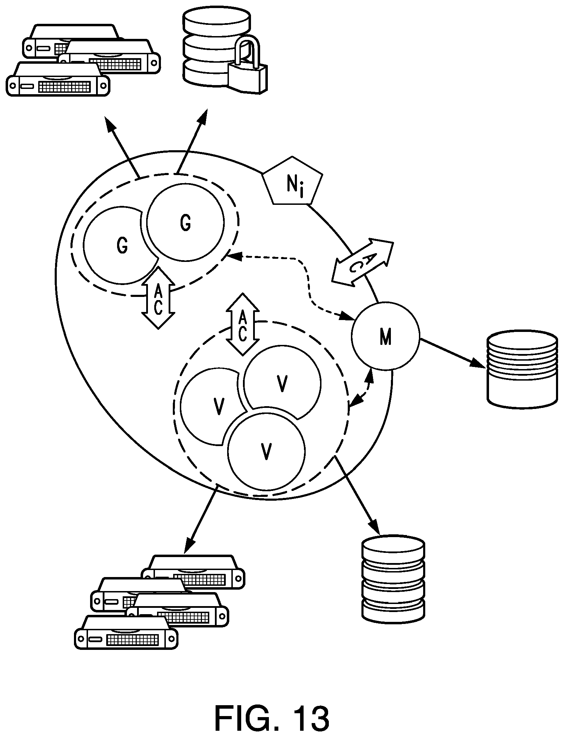

Figure 12 shows a decentralised system of computing nodes Nx, each capable of both generating G and validating V credentials. These credentials can be valid across the whole system (unless restricted to some nodes as result of on-soil regulation or the like), and in this case are associated with transactions for a set of users (clients) whose transactions are routed to that node, typically through geographic proximity. Nodes provide credential generation G and credential validation V as services to clients, and they need to be able to generate the credentials securely and validate them securely while they are valid at least. In the context of the present disclosure, it can be assumed that one of these nodes is located in the edge of a 5G system, so that it can provided credential generation and validation services to clients accessing a 5G network through that edge. In the architecture shown, credentials are not stored - they are generated on request and validated on the fly. As Figures 12 and 13 show, in addition to credential generation and validation, key management K and monitoring M can be considered as services both locally at a node and across the system, and access control AC (note that this is not the same abbreviation as for discussion of transaction flows, where AC will refer to Application Cryptogram) will typically be required to allow access to a service. These aspects will all be described in more detail below.

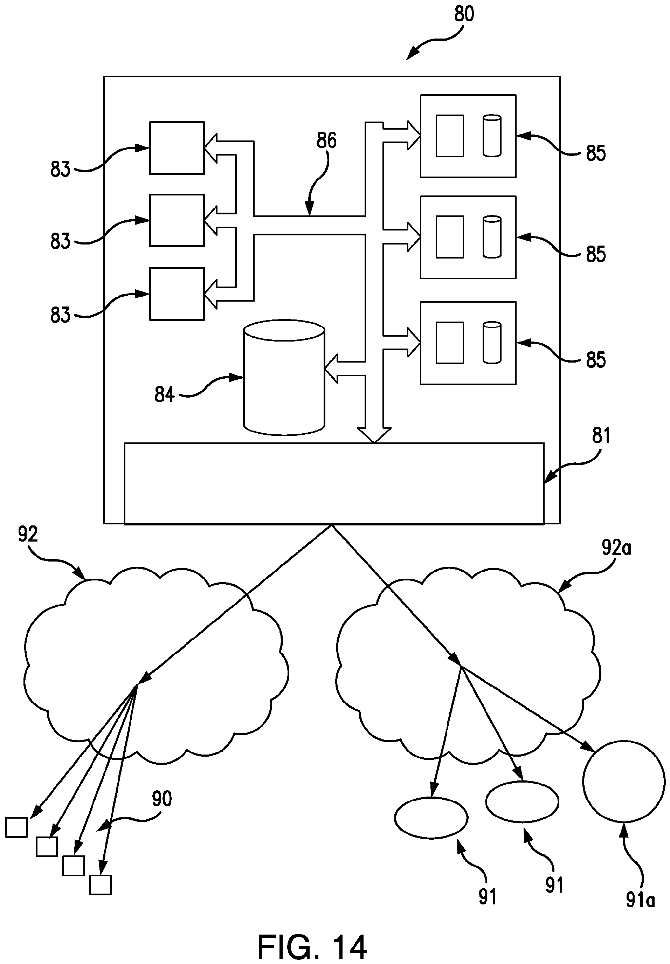

Elements of a suitable computing node are shown in Figure 14. The node 80 comprises at least one networking connection 81 to allow communication to clients 90 and other nodes 91 as well as (in this example) a central node 91a. Communication is shown here as being through separate networks to each set of other parties - through a first network cloud 92 for connection to clients (in embodiments of the disclosure, this may be simply the 5G connection to clients connected to that edge), and a second network cloud 92a for connection to other nodes within the distributed system. This reflects that these networks may be physically different, or that they may have different security requirements and protocols.

The node 80 may generally be implemented by one or more conventional servers 83 (which will contain their own processors and memories - not shown - along with other components as would normally be found in a server) and a memory 84 containing a central database. Also comprised within the node 80 are a plurality of hardware security modules 85 (HSMs), adapted to hold cryptographic material in the form of keys needed to perform cryptographic functions and to perform cryptographic functions securely. Here elements within the node 80 are shown communicating by means of a bus 86. While the node 80 in this case is represented as a single data centre, this is not required - the "bus" may be, for example, comprise a dedicated network connection between a group of related data centres that allows them to provide a real-time response such that they will appear to other entities communicating with the node to be part of an integrated whole.

Existing procedures for credential management in payment systems are centralised - any request to create or validate credentials results in a query to a centralised system. For a payment system implementing EMV standards, credentials are generated using keys derived according to a hierarchical process. Issuer Master Keys (IMK) are associated with a specific range of tokens, and keys for use for credentials are derived hierarchically (Card Master Keys - CMK - from IMK, and then Session Keys - SK - from CMK). This approach is used for devices, such as physical cards, but is also used for digital transactions. The number of digital transactions is increasing extremely rapidly, as opposed to device-based interactions where the growth is more consistent with resources.

In the digital ecosystem, while there is very rapidly increasing demand, there is also generally a more secure environment, as the interaction is typically between merchant systems (or payment service providers) and the transaction system over secure pathways between well-identified participants. This also applies to operations taking place within the 5G infrastructure. There are thus interactions that may require multiple cryptographic operations for security in a device context that can be streamlined when delivering services in a server context when exposing API to access the services while keeping all the assets secure in a constrained environment including key management and cryptographic operations.

As can be seen, NODES provides a distributed system for generation and validation of credentials - however, care is needed in design to ensure that any benefits in distribution of computation are not offset by vastly increased messaging to ensure system-wide operation (including generation of credentials at one node and validation and another). Existing EMV key generation processes would lead to propagation of large numbers of keys and associated messaging. In NODES, however, the distributed approach is supported by replacing the binding of a token to a specific hierarchically derived key, allowing instead the first available key from a stack of keys to be allocated to a tokenized transaction. This approach, using flexible and dynamic key management, allows for a scalable solution. Monitoring can be carried out in such a way as to ensure that the distributed architecture is secure without requiring the transmission or replication of large quantities of sensitive information. This approach can also be carried out in a standard HSM using fully FIPS compliant processes - for example, DES and 3DES need not be used. This approach is described in more detail below.

As noted above, the current EMV security model for digital transactions uses a security model as illustrated in Figure 4. This security model involves Issuer Master Keys (IMKs) being stored in the transaction system HSMs and used to derive Card Master Keys (CMKs) from the relevant IMK and a card PAN (Primary Account Number). These CMKs are then stored in a device (typically a Secure Element or substitute technology). When using software-based solutions to generate transaction credentials using a mobile device, a Session Key (SK) is generated using the relevant CMK and an ATC (Application Transaction Counter) for the card/device - this is currently generated by the Credentials Management System (CMS) as shown in Figure 4. In such a model, all tokens, even for fully digital transactions, are bound to this IMK/CMK/SK derivation. This also applies for transaction credentials generated by server through API exposed by the transaction system for remote payment transactions.

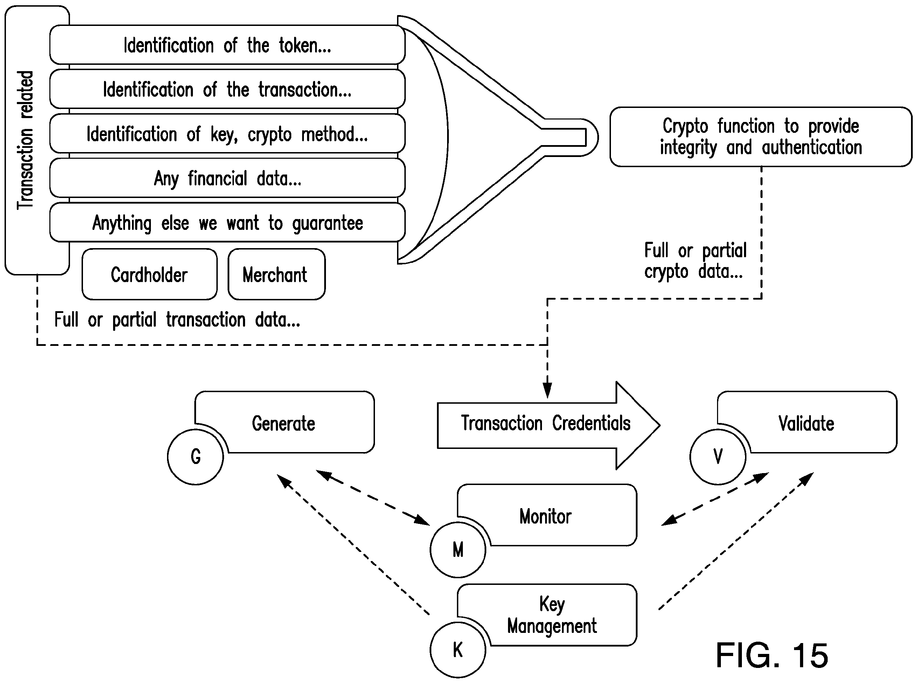

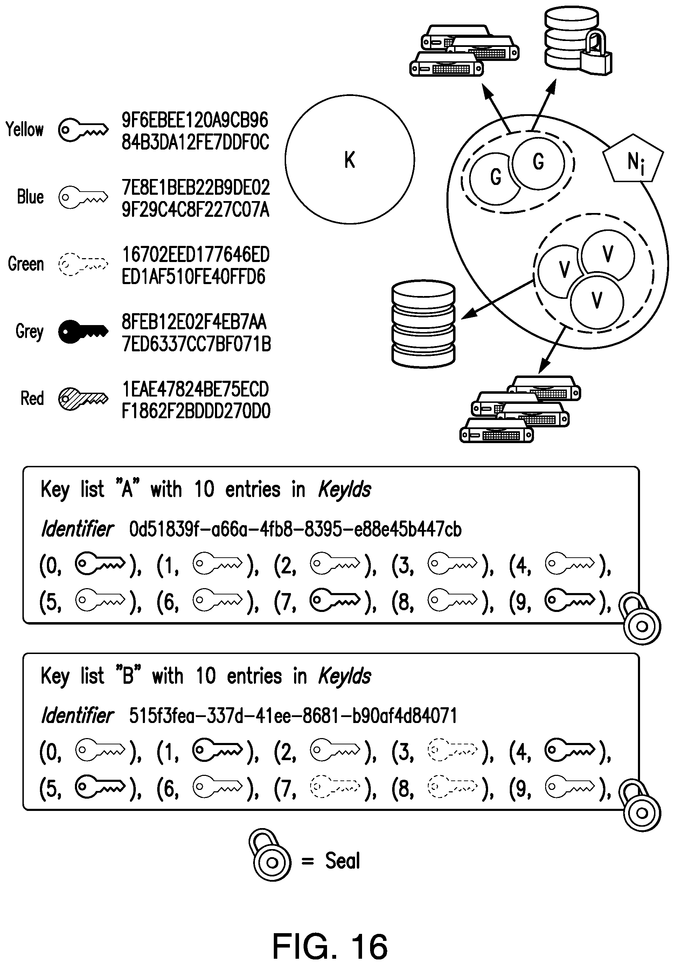

This approach requires a very heavy management load for keys, which is not appropriate for fully digital transactions, as is discussed below with reference to Figures 15 and 16. Generation of SKs, and hence Application Cryptograms, requires multiple cryptographic operations, not all of which can be carried out by a conventional off the shelf HSM, so bespoke HSMs are required.

Massive distribution of keys across the system is required so that performance of a transaction can be supported wherever it occurs, and ATC management is complex. It would be desirable to use standard HSMs, avoid massive key replication while having keys directly available for use, and to be able to provide a solution that limits the number of HSMs overall (as these typically support only a few thousand keys).

Much of this security is to provide assurance by appropriate prevention mechanisms even if there is the possibility of compromise at a system endpoint (for example, at the cardholder device). Aside from this, security has a limited role, as shown in Figure 15. The main purpose of the cryptographic function is to provide a guarantee - this covers both integrity of the data and authentication. The transaction related data protected by a cryptographic data includes identification of a transaction and the associated token, along with an indication of any cryptographic processes used and any relevant financial data (along with any other aspect of the transaction that needs to be guaranteed). This is represented by a transaction credential - this needs to be generated G and subsequently validated V, with these processes being monitored M to ensure overall system integrity and supported by a key management system K of some kind. The present disclosure relates to an approach to monitoring which is effective to address the consequences of erroneous or malicious action by appropriate detection, messaging and reaction - as will be described, this largely takes place separately from the actual performance of a transaction.

This approach allows for decentralisation of the credential system from a complex central server into a number of nodes providing services. These nodes will typically be geographically distributed but may extend over a number of data centres (for example, by use of a cloud infrastructure to achieve data sharing within a node). These nodes provide services - in relation to credentials, a generation service G and a validation service V - with defined rules for access control to the services. The merchant or PSP communicates with the generation service G to obtain credentials, which are then used in a standard authorisation process carried out over the payment network of the payment system, with the validating service V being called upon where necessary to validate the credential. These services have access to the computing infrastructure (HSMs, databases) of a node. Monitoring M and key management K services are also provided - these may be centrally organised or comprise a mix of central and local functionality.

Access control to services can be provided in an essentially conventional manner. A general set of controls can be defined for a node, with the possibility of local modification - for example, to meet local regulatory or other specific security requirements. This approach makes it easy to implement localised policies, for example, by constraining all traffic for a particular country to a particular set of nodes, or by taking other region- or market-specific actions. Access control can be performed at more than one level (for example, for individual services, but also for a node), and there may be specific rules or checks for specific service types. Access control is potentially very granular and may provide specific solutions in a versatile way - for example, it could be used to allow a given merchant to perform a maximum number of transaction credential generation operations during a defined time for a given token.

The key management mechanism shown in Figure 16 illustrates how a limited number of keys can be allocated to a node while providing a deterministic process in order to pick a key to generate credentials. The same process can be used by a validation entity to determine the key that was used by the generator so that it can validate any cryptographic material that is part of the credentials submitted for validation.

For each node, the generation G and validation V services have access to a pool of HSMs. The HSMs contain keys that are each uniquely identified by a set of key identifiers (KeyId). KeyId may be a label, a value, an explicitly unique value such as a UUID, or anything else with appropriate properties. These KeyId values are stored in uniquely identified (Identifier) key lists - these key lists provide a list of relationships between an identifier (Id) and a stored key (KeyId). The identifiers (Id) are what will be determined by the deterministic process in order to establish what key is to be used, as will be described further below.

The integrity of each key list Is guaranteed using a seal (Seal) - if the key lists are provisioned from a central location, this may be applied by a trusted party associated with that central location. Several other distribution models can be supported using for example a trusted party being a local functionality instead of a central location. A node will typically have a number of key lists available, but with only one active for generating credentials (G) at a given time - it will however generally be necessary for the validation service (V) to be able to access any key list that may be associated with a credential that is still valid. Key rotation in this approach is extremely straightforward - it may simply involve replacement of the active key list with another key list. It is however very straightforward to tell which KeyId is needed to validate a credential - it will be determined fully by the node identifier and the reference of the key list. That information is part of the credential and is used as input to the deterministic process to pick a key from a list of keys.

Figure 16 illustrates an exemplary arrangement for Node Ni, which has two generation services G able to generate credentials associated with transactions. At any given point in time, these services G will be required to use a given key list - say Key List A in the first instance. This uses the yellow and blue keys, so these keys must be loaded in the HSMs used by the generation services G. After the expiry of a period of time, the key rotation process may for example mandate the use of Key List B - this uses yellow and blue keys, but also the green key, so the green key must be loaded in the relevant HSMs if not already present. The specific key to be used is selected from the key list by a deterministic process- this will typically give a different result after key rotation, but this is not inevitably the case (for example, Id=3 or Id=6 would give the blue key before or after rotation). While the generation services G do not need Key List A after key rotation, the validation services V still do - they require access to any key list that relates to a potentially valid credential. The validation services V must be able to establish exactly which key was used to generate a credential by the generation services G in order to validate a credential.

The transaction related data to be protected cryptographically includes identification of the token associated with the transaction, but also identification of the transaction itself. For this, some kind of transaction identifier is required. At each node, the credential generation and validation services have access to a local database which can be used to manage such data. To ensure that transactions are managed effectively across the system, any generation of transaction credentials for a given token should be associated with a unique transaction identifier for each transaction. This may be a UUID or any appropriate identifier structure (such as a concatenation of an n bit node identifier, an e bit epoch time, and a c bit local counter).

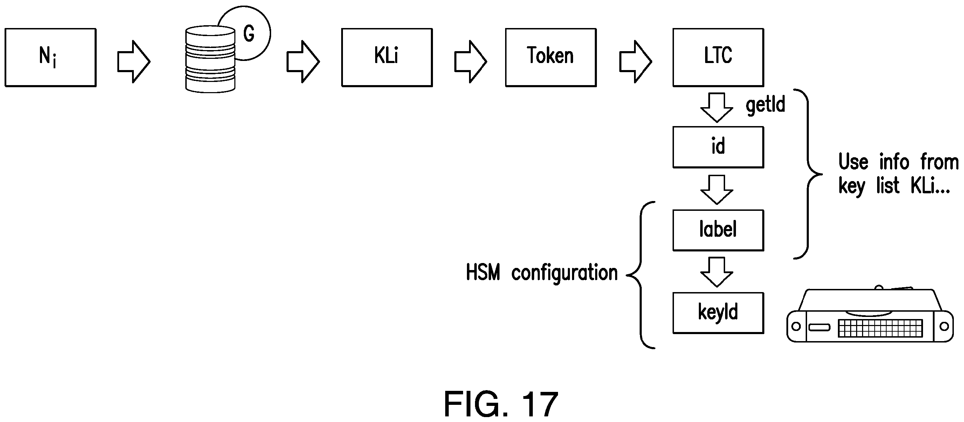

The size of data to be carried in transaction credentials could however be reduced to a few digits by use of a local transaction counter. This could simply be stored in the local database of a node and the local (rather than a global) value incremented when a local generation service G generates new transaction credentials for a token, a process shown in general terms in Figure 17.

An exemplary process for identifying a key to use for a transaction will now be described with reference to Figure 16. As indicated, at any given time a generation service G has access to a set of keys in local HSMs and uses keys in accordance with its currently active key list. This key list is itself uniquely identified (by Identifier) and contains a list of entries which correspond to relationships between an identifier (Id) and a stored key, represented by KeyId. In the case of Key List A, there are ten entries, and each Id is a single integer.

There will be a deterministic process associated with a key list to determine which key will be associated with a given transaction (as illustrated in Figure 17). It need not be the same deterministic process for every key list, but it needs to be used consistently for that key list so that both generation and validation services will achieve the same result. To provide this association, the deterministic process should operate on information identifying the transaction, such as some kind of transaction identifier - in this case, the local transaction counter (LTC) is a particularly effective choice as this is conveniently available and easy to process. Note also that in the context of the token described in embodiments of the disclosure, it is LTC - rather than an ATC, as for a payment application - that is used as the "counter" value carried in the transaction data.

There are many choices available for a function, but the simplest choice is a MOD operation - for example here, Id = LTC MOD 10 would be appropriate to provide a deterministic result which could point to any of the available values of Id. Any validation service V with access to the transaction counter value in transaction data (or any counter derived from that value) can then determine the logical key identifier that was used by the generation service G that generated the credential and access the correct stored key without any trial-and-error mechanism. Associating the deterministic process function (referred to below as keyList.GetIdFunction, or GetId) to the attributes of a key list in this way allows a scalable solution that can accept any number of logical key identifiers for a given key list.

The HSM cryptographic function should be appropriate to ensure data integrity and authentication through credential generation and validation. The cryptographic function operates on the chosen transaction data, using the key, and provides an output which does not expose the key. Various alternative cryptographic functions could be used - HMAC is a particularly effective choice with several options regarding the hashing function, but CMAC, CBC MAC are among possible alternatives not even talking about solutions using asymmetric cryptography. The cryptographic function used should be specified in the key list (as keyList.CryptoFunction) and is also driven by the capabilities of the HSMs used for generation and validation. On-soil regulations, cryptographic material export or other security considerations may lead to the choice of specific cryptographic functions.

Within the transaction data, there should be information representative of the application cryptogram generated during the transaction process. This may be a reduced form of the cryptogram - for example, in legacy EMV transactions this may be provided as the CVC2 field. This is significant as a validation service V must be able to access all the data used by a generation service G to generate a cryptogram - this will include the following:

dynamic information carried as part of the transaction flow;
shared information from one of the following:

replicated processes (such as management of the key lists);
system parameters for particular use cases.

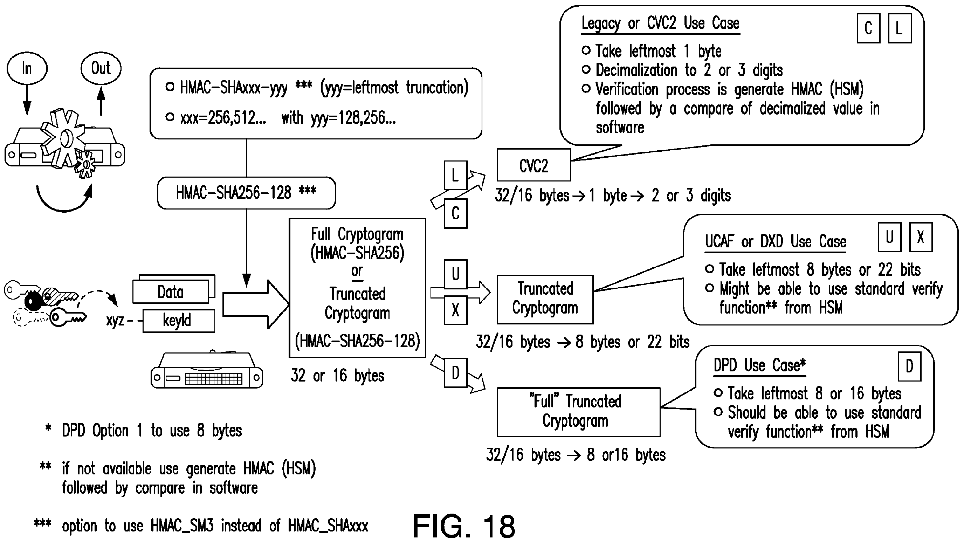

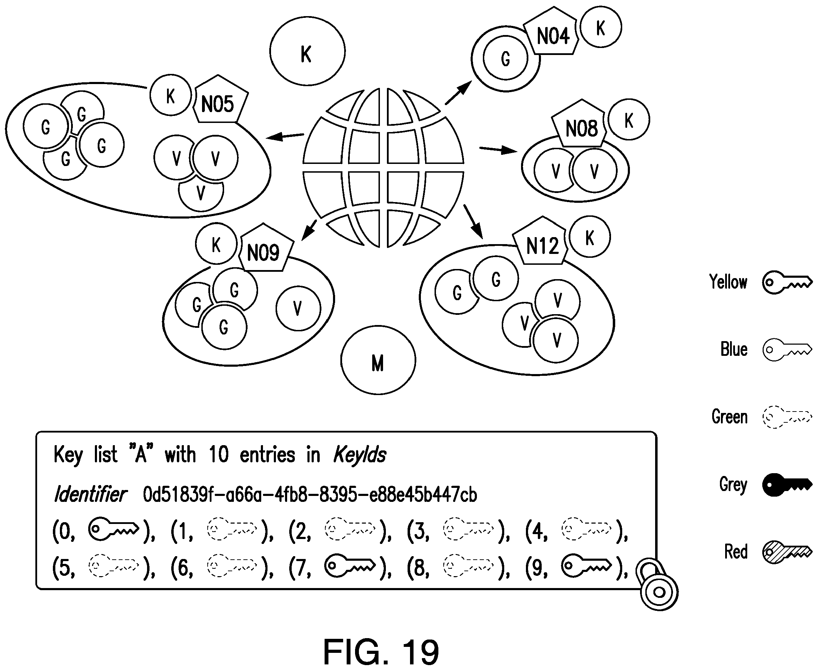

A full set of cryptographic mechanisms is shown in Figure 18. Key management is discussed with reference to Figure 19. There are two aspects to key management in this model: management of the keys themselves, including their generation and delivery to the HSMs associated with the nodes, and management of the key lists, including their generation, distribution, activation and deactivation. The key lists are sensitive assets while keys are considered as secret assets - the key lists define the keys to be used for generation and validation of cryptograms. Keys require end to end security with secure transport of the keys using wrapping/unwrapping techniques when loading the keys in HSMs. Their use should not be compromised by the key lists in case an attacker would like to change the content of a key list in order to alter the key selection process. The integrity of key lists is guaranteed by the seals - a seal is provided for a key list by the generating party or an associated trusted party, will involve a suitable cryptographic process (such as HMAC with an appropriate dedicated key or using for example a digital signature generated using asymmetric algorithms such as RSA, ECC, SM2...), and has the effect that any relevant part of the system can have confidence that the key list was generated by an appropriate party and has not been modified. In addition, the key list seals can be used in the generation and validation of cryptograms to secure the credentials.

Different control models are possible. There may be centralised control, with a central service generating keys and key lists, and distributing these to the different nodes. There however also may be localised control if dedicated processes are required at a particular node. This may in particular apply if there are specific requirements for a particular country - for example, on-soil regulations or restrictions on export of cryptographic material. This may also apply if there is a proprietary mechanism needed for HSM management - for example, with a particular cloud service provider. This need not be node-limited - it could apply to regional control with a central service within a region (this may be particularly appropriate where there is a specific security model for a particular country to meet local legal requirements). There may also be a hybrid or composite model, in which some key and key list provisioning is central, whereas some is local - there may also be a distributed model in which distributed peers together assume the role of a central service.

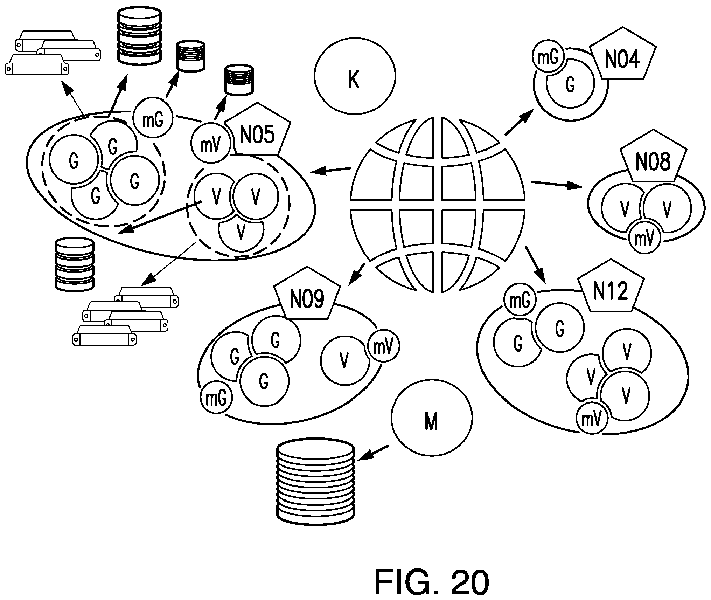

Monitoring is shown in general terms in Figure 20. Here, monitoring is complementary to security actions taken directly in a service to prevent fraud or misuse (such as the basic purpose of the service - generation of a credential using a cryptogram with subsequent validation). Such monitoring aims to detect security anomalies associated with a transaction - it can then trigger appropriate reaction mechanisms to contain any security risk and identify any attacker. In principle, this may have both local and central aspects. It is found that a hybrid approach is particularly effective in order both to provide effective detection of any issue and to produce reaction effective to counter risks associated with a fully distributed architecture.

There are three types of issue to be addressed by monitoring in such a system: integrity of the distributed system; generation of transaction credentials; and validation of transaction credentials. As transaction credentials may be generated or validated anywhere, it is important to have effective monitoring across the whole distributed system. An exemplary risk is that of misuse by an attacker of genuine transaction credentials generated by a generation service G in a node, in particular by an attempt to validate in multiple validation services in other nodes - this would be an issue if a validation service V did not have effective visibility of actions taken by validation services V in other nodes of the distributed system.

While monitoring is important to maintain the integrity of the system, it is also important to limit the amount of messaging that results to ensure that the system is scalable and will not be overloaded by the monitoring process. It is therefore desirable for messaging out of nodes to be limited to that genuinely necessary to address threats and for nodes to store information locally to allow effective use of the results of monitoring.

Using a 5G architecture with edge servers able to provide rapidly accessible computation and (using a NODES distributed cryptographic service system) cryptographic services, a different transaction flow is possible which avoids the drawbacks of existing approaches while still meeting "fast flow" requirements. This uses the split path approach of Figure 1 and is illustrated in Figure 21.

As for the Figure 1 case, there are two paths involved in the transaction - the "conventional" transaction path 2100 between the user device 11 and the terminal 7, ending with an authorization request sent by the terminal 7, and an "additional" path accessed over a 5G connection 2111 from the user device 11 to an edge server 2103 with access to a local node 2106 of a distributed cryptographic service network. As for the Figure 1 case, this involves the creation of a dummy result 2105 (specifically, a dummy AC) at the edge server 2103 which is fed back to the user device 11 for use in the "conventional" transaction, and hence forwarded by the terminal 7 seeking authorization of the transaction. The dummy result 2105 is not used for authorization of the transaction, but it is recognized by the token management system 2114 of the transaction processing system 2104 as a dummy result and instead used as an identifier to recognise the real AC 2115 produced by the edge server 2103. In the case shown here, certain functionality of the edge server 2103 is provided by particular functional modules - an access point module 21030 provides the point of communication with the mobile device 11 and assembles the response to be made to the mobile payment application 702; interaction with the credential service node 2106 is provided by a digital contactless transaction server module 21031; whereas cryptographic results needed at the edge server are provided by a cryptography as a service module 21032. While these are all shown as modules of a separate server here, they may instead be, or be a part of, discrete servers (for example, servers interacting locally at the 5G base station). While the local node 2106 of the distributed cryptographic service network is shown here as a separate computing device, in other embodiments this may form a part of the edge server 2103.

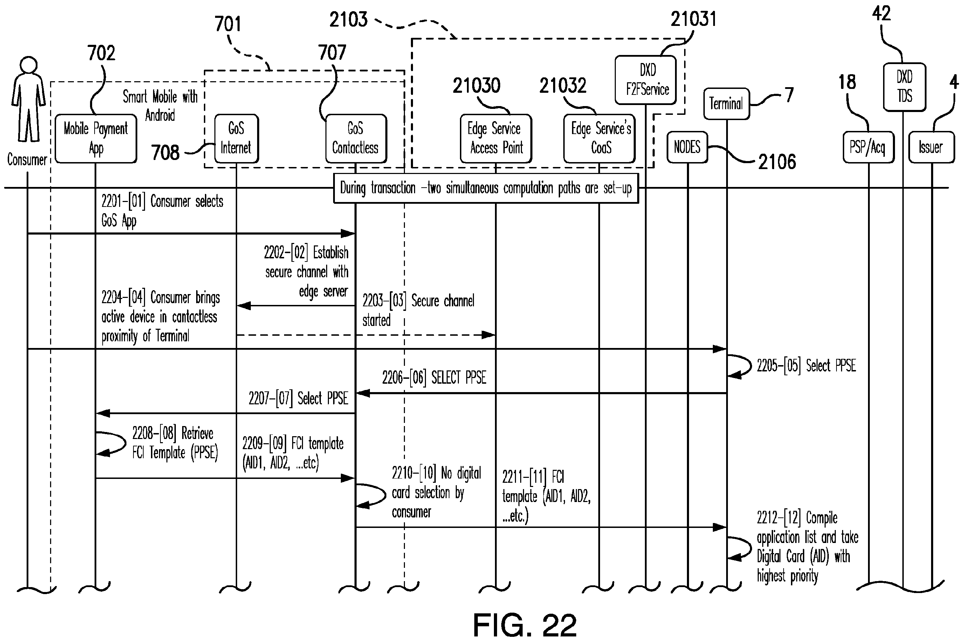

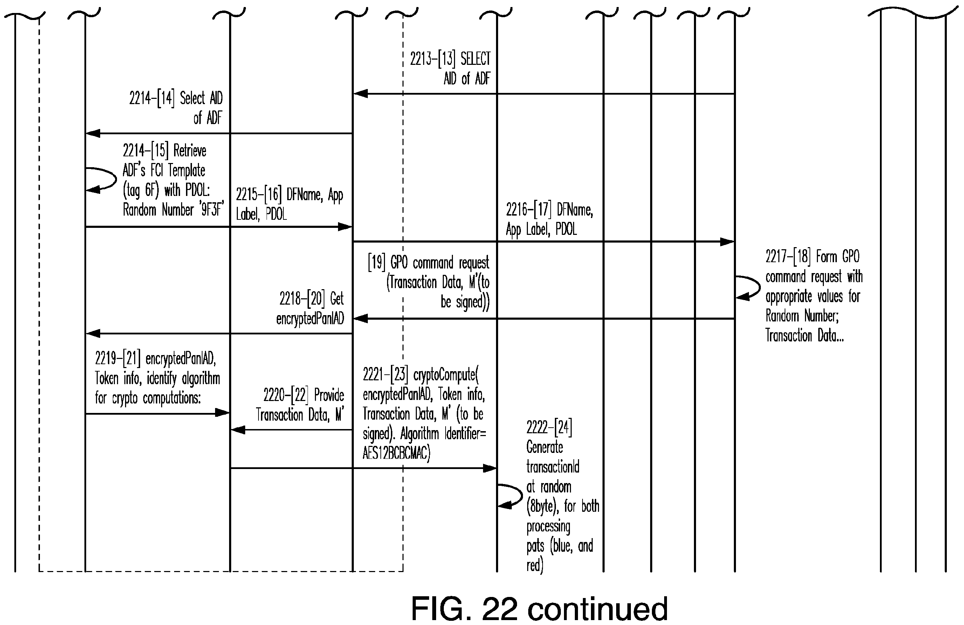

The stages of this process are illustrated with respect to Figure 21 and also Figures 22 to 24. The first stage involves initiation of the transaction and establishment of the two-path process. After a consumer selects 2201 the wallet application 701 at their device, the wallet application 701 will initiate 2202 and establish 2203 a secure session with the local edge service access point 21030 - this is in place when the contactless transaction begins 2204 by the consumer 1 bringing the device into proximity with the terminal 7. The transaction continues in the normal way for an EMV contactless transaction - the terminal 7 prepares 2205 to establish a PPSE and issues 2206 a SELECT PPSE command to the wallet application 701 through its contactless interface 707, and the flow then continues in essentially the same manner as in Figure 10. The SELECT PPSE command is communicated 2207 to the MPA 702, which retrieves 2208 its template (FCI - File Control Information - template) for such a transaction and provides 2209 this to the wallet application. The wallet application 701 notes 2210 that there will be no card selection process by the consumer as this is a rapid contactless transaction and provides 2211 a list of payment applications by application identifier (AID) to the terminal 7, with the "fast flow" application heading the list. The application list is prioritised 2212 by the terminal 7, and it is again assumed that fast flow is selected, and this is communicated 2213 to the wallet application 701, and hence 2213 to the MPA 702. The MPA 702 then retrieves 2214 the FCI template and establishes what information is needed from the terminal 7 and in what form and provides 2215 this to the wallet application 701 as a Processing Data Objects List (PDOL), which is sent 2216 to the terminal 7. The terminal 7 then forms 2217 a Get Processing Options command which includes all necessary transaction and transaction-related data for processing by or for the MPA 702. This contains transaction data including any information necessary to prepare an AC (such as the unpredictable number). This information will also allow the MPA to geolocate the transaction, and there may be particular algorithmic usage requirements associated with geolocation. The wallet application 701 advises 2218 the MPA 702, which provides 2219 to the wallet application any information needed for the transaction including any encrypted information from the LDE 704 - here, this will be the ATC value, identification of the algorithm to be used, the token, and the associated issuer application data (stored as encryptedPanIAD in the LDE). The wallet application provides 2220 transaction data received from the terminal 7 and sends 2221 this with the processing information received from the MPA 702 to the edge server 2103 via the access point 21030 through the secure session. The edge server 2103 then generates 2222 a random transaction ID (transactionId) for use in both processing paths. This transactionId is a random 8-byte value, which as described before is used as both an identifier and a dummy AC value.

The "additional" path is illustrated in Figure 23 - this path uses NODES for credential generation and closely mirrors the NODES process used for online digital transaction described in WO2022/046330. This process will be relatively rapid, but it is not constrained by the "fast flow" constraints on time of contact between payment device 11 and terminal 7, as this path does not return to the payment device 7. Firstly, the edge server at the access point 21030 requests 2301 a suitably configured module or server 21031 - here described as "DXD F2F Service", where DXD describes a tokenisation architecture and F2F indicates that the service relates to face-to-face contactless transactions - to produce the "real" AC using NODES. The DXD F2F service 21031 interacts with the NODES service via a local node 2106, firstly requesting 2302 decryption of the encryptedPanIAD, which allows PAN information (such as PAN, PSN, expiry date...) to be established 2303 and provided 2304 to the DXD F2F service 21031. The DXD F2F service 21031 may use geolocation to determine MerchantID for the transaction, and there may be additional transaction information collected at this point (for example, a Strong Cardholder Authenticator flag may be received from the MPA 702). The DXD F2F service 21031 then provides 2305 transaction information in the appropriate form for credential generation (here, this is as a UCAF v0.6 template as will be described further below with reference to Figure 25). The NODES node 2106 generates 2306 a credential as has been described above for NODES, and this is provided to 2307 and used at the DXD F2F service 21031 to create 2308 an AC for providing to a Payment Service Provider (PSP) 18 for the merchant- security is provided by the NODES-generated credential, token information for switching/routing, and transactionID for matching. This cryptogram is provided 2309 to the PSP 18, which provides 2310 this information to the DXD Transaction Management System 42 for reconciliation.

The "conventional" path - in terms of routing, but not in terms of information provided - is shown in Figure 24. The edge server 2103 interacts with a local cryptographic service 21032 in providing the transactionId (as a dummy AC) and parameters required for digital signature. Rather than relying on the limited computational power of the payment device 11, much more powerful edge server computing can be used, without a communication lag, to perform the more complex parts of the digital signature calculation. The TransactionId, when generated, is stored 2401 as the "dummy" AC, The rest of the cryptographic elements needed to perform the digital signature can now be produced, with the edge server 2103 using local cryptographic resources (here described as Edge Server CaaS 21032 - Cryptography as a Service) to produce results with rapid processing and minimal communication latency. The edge server requests 2402 a $(k, k^{-1}, XR)$ triple from the CaaS 21032 - while this may be computed directly, for even greater speed this may simply be taken from a buffer of precomputed pair values. k is generated at random, and (ANS X9.62 provides details) XR is computed 2403 on EC(ECDSA,k) as (XR, YR) = kG, where G is the EC generator. XR is further converted to an integer j.. The $k,k^{-1}$, XR) triple is provided 2404 to the edge server, which determines 2405 the message to be signed by the MPA, which includes this dummy AC. The edge server requests 2406 a hash e (using SHA-256, for example) to be made 2407 of this message by SaaS, which returns 2408 this value. The edge server 2103 can then compute 2409 the final pre-computable parameter, r, where

$$r = j \bmod n.$$

and provides 2410 the message to be signed and the pre-computed parameters $(k, k^{-1}, XR, e, r)$ to the wallet application 701, and hence 2411 to the MPA 702. The secure channel can close 2412 at this point. Little time has elapsed at this point as the communication pathway between the payment device 11 and the edge server 2103 has minimal latency and the edge server 2103 and the CaaS resource 21032 are computationally powerful. The MPA 702 determines 2413 the algorithm to be used for digital signature (in the example shown here, this will be AES128 as this is the cryptographic suite that has been used earlier in the example) and will retrieve the relevant private key from the LDE 704. This is then used to compute 2414 the dynamic signature over the message including the "dummy" AC, and this dynamic signature is provided 2415 to the wallet application 701, which uses it to prepare 2416 a GPO command response which is sent 2417 to the terminal - this is the last point at which contact is needed, so defining the end point of the time limit for the "fast flow" process. As for conventional EMV, the terminal 11 submits 2418 an authorisation request to authorise the transaction - the signed message comprises token information and normal transaction data as well as the transactionId (as the AC) which will subsequently be used for reconciliation. The message is here received by the PSP 18 for the merchant, which routes 2419 the message using the token information to the DXD TMS 42 for processing. The DXD TMS 42 (specifically, the TDS) determines that the "dummy" AC is not a real AC, but a transaction identifier, and it uses the transaction identifier to match 2420 the information received from the two paths - in practice, the matching may be achieved using a transactionId and MerchantId pair as MerchantId will also be provided over both routes. The TMS 42 can establish from the "dummy" AC path the authenticity of the signing key stored by MPA, and as such that the transaction is genuine and not a fake, while retrieving the real cryptogram on the transaction data necessary for authorisation and clearing from the edge server path. The real AC can be validated 2421, again using the NODES architecture as described in WO2022/046330 A1, and the transaction reassembled and provided 2422 to the issuer for authorisation in the conventional manner, at which point the transaction behaves exactly as a conventional EMV contactless transaction.

For completeness, further discussion of transaction handling for digital transactions using NODES, and the application of this transaction handling model to embodiments of this disclosure, are illustrated in Figures 25 and 26, and a discussion of how secure tunnelling between the edge server and the user device may be achieved is illustrated in Figure 27.

Figure 25 illustrates the formation of a UCAFv0.6 - UCAF (Universal Cardholder Authentication Field) is a standard for collecting online transaction information - appropriate for use in present embodiments in which a NODES arrangement is used for credential generation and validation and in which the SM suite of cryptographic algorithms is used. Use of UCAF in the context of NODES is discussed in more detail in WO2022/046330 (which uses UCAFv0.7, but employs similar principles to that shown here) and also in the applicant's subsequent British Patent Application No. 2107661.7 (which shows use of UCAFv0.6), both of which are incorporated by reference to the extent permitted by law.

The top part 251 shows generation of the application cryptogram using an SHA-256 keyed hash. Transaction data 2511, including the LTC 2512, and transaction processing information 2513 are hashed using a key Kji derived through NODES key selection to produce a 22 bit transaction cryptogram. This, along with various of the transaction data (and a checksum SHA-256 hash 2521) is provided to an AES128 block cipher 252 operating in CBC mode which forms an encrypted part of the UCAFv0.6 (effectively a MAC). An unencrypted header 253 is also provided - this provides necessary information for routing of the transaction (such as a node identifier) and information necessary to begin processing of the transaction for validation of the credential, for example.

The full routing of the "additional path" into the payment network is shown in Figure 26. As previously noted, the edge server 261 of the access point connects to a NODES node 262, which interacts with the wider NODES network 263 (described here as "NODES CLOUD"), which enables the transaction information to be provided for authorisation in the network, here via a PSP 264. This will be routed to the acquirer 265 and through the transaction infrastructure 260 in the normal way, with transaction information available for routing being such as to direct it to the DXD transaction processing system 266, where, as previously described, reconciliation with the "fast flow" contactless transaction performed with a dummy AC will be carried out. The credential for the actual AC will however be validated using the NODES network 263, and the necessary transaction information to allow authorisation is provided to the issuer 267. Once authorised, authorisation information follows a conventional path for an EMV transaction and is not explicitly shown here.

Secure tunnelling will now be described in more detail with reference to Figure 27. Figure 27 shows the establishment of temporary secure tunnelling between the user device (specifically the wallet application, and hence the MPA, and the edge server). There will also be a permanent secure channel between the edge server and the local instance of the NODES network. This may be implemented through any appropriate key establishment mechanisms () and will not be described further here.

The secure tunnelling approach shown in Figure 27 has three phases. The first phase 271 is an initial set-up phase, which will take place at initial system set-up. The wallet application 701 makes a certification request 2711 to a certification authority server 270, which with its response 2712 provides the basis for certified public key encryption at the edge server 2103.

The second phase 272 involves initialisation of the secure tunnel when needed - this will be initiated at the wallet application 701 and will typically be started by the user activating the wallet application, which will generally take place seconds before the actual transaction. The first stage is authentication 2721 of the device (optionally this may also involve authentication of the user) and if this is successful (for example by the edge server 2103 determining 2722 that the or each certificate is legitimate), this is followed by session key generation 2723 with session keys encrypted and sent 2724 to the wallet application 701 in encrypted form using the public key encryption already established. These session keys are then decrypted 2725 at the wallet application 701.

The third phase 273 is the secure tunnelling itself. In this phase, the wallet application 701 acts as a client and presents data to be transmitted for processing after encryption 2731 and MAC generation 2732 using the session keys. The edge server 2103, acting as the server in this server/client relationship, verifies the MAC 2733 and decrypts 2734 the data to perform 2735 the outsourced computation, with the result being encrypted 2736 and a further MAC generated 2737 before the result is sent back to the wallet application 701, with MAC verification 2738 and decryption of the result 2739 at the wallet application 701 following. These steps may be repeated 274 as necessary until the "additional path" requires no further interaction between the wallet application 701 and the edge server 2703, at which point the secure tunnel will be closed.

As the skilled person will appreciate, the embodiments described above are exemplary, and further embodiments falling within the scope of the disclosure may be developed by the skilled person working from the principles and examples set out above.

Aspects of the disclosure are described in the following clauses:

1. A method for carrying out a wireless transaction between a first computing device and a second computing device for authorisation through a transaction processing system, the method comprising at the first computing device:

establishing a secure network connection with a third computing device; initiating the wireless transaction with the second computing device; providing information for performance of a security protocol for the transaction to the third computing device over the secure connection, wherein performance of the security protocol includes determination of a secure result; receiving a dummy secure result from the third computing device; and
completing the wireless transaction with the second computing device using the dummy secure result, such that for authorisation of the wireless transaction the dummy secure result can be used to reconcile the wireless transaction with a true secure result for the wireless transaction prepared by the third computing device and provided to the transaction processing system.

2. The method of claim 1, wherein the third computing device is an edge server, and wherein the first computing device and the third computing device communicate by cellular telecommunications, and the third computing device is located at the base station of a telecommunications network.

3. The method of claim 1 or claim 2, wherein the wireless transaction is a contactless payment transaction, wherein the first computing device is a consumer computing device and the second computing device is a point of sale terminal, and wherein the secure result is an application cryptogram for the contactless payment transaction.

4. The method of claim 3, wherein the first computing device receives variables computed for a digital signature by the third computing device along with the dummy secure result, and wherein the first computing device uses the computed variables to digitally sign transaction data including the dummy secure result for provision to the second computing device.

5. A computing device comprising a memory and a suitably programmed processor, wherein the computing device is adapted to carry out the method of any of claims 1 to 4 as a first computing device.

6. The computing device of claim 5, wherein the computing device is a mobile telephone, wherein the computing device is programmed to use host card emulation for wireless interaction with a second computing device, and wherein the computing device comprises a wallet application adapted to perform a contactless payment transaction with the second computer device.

7. A method to support performance of a wireless transaction between a first computing device and a second computing device for authorisation through a transaction processing system, the method comprising at a third computing device supporting the performance of the first computing device:

establishing a secure network connection with the first computing device; receiving information for performance of a security protocol for the transaction from the first device over the secure connection, wherein performance of the security protocol includes determination of a secure result; providing a dummy secure result to the first computing device; and

obtaining a true secure result for the transaction, and providing the true secure result to a transaction processing system using the dummy secure result as an identifier for the transaction whereby the transaction processing system can reconcile the true secure result with the wireless transaction comprising the dummy secure result provided for authorisation.

8. The method of claim 7, wherein the first computing device and the third computing device communicate by cellular telecommunications, and the third computing device is located at the base station of a telecommunications network.

9. The method of claim 7 or claim 8, wherein the wireless transaction is a contactless payment transaction, and wherein the secure result is an application cryptogram for the contactless payment transaction.

10. The method of claim 9, further comprising obtaining a credential for the secure result from a distributed cryptographic service for providing credentials for digital transactions.

11. The method of claim 9 or claim 10, further comprising computing variables for a digital signature for the wireless transaction, and of providing the computed variables along with the dummy secure result to the first computing device to allow the first computing device to digitally sign transaction data.

12. A computing device comprising a memory and a suitably programmed processor, wherein the computing device is adapted to carry out the method of any of claims 7 to 11 as a third computing device.

13. The computing device of claim 12, wherein the third computing device is an edge server located at the base station of a telecommunications network, and wherein the first computing device and the third computing device communicate by cellular telecommunications.

14. A method of verification of transaction details at a transaction processing system, the method comprising:

receiving a transaction for verification originating from a point of sale terminal for contactless transactions; establishing that a secure result in the transaction is a dummy secure result and not a true secure result; using the dummy secure result as a transaction identifier to identify a message comprising the true secure result from an online processing system; and verifying the transaction details for the transaction using the true secure result.

15. The method of claim 14, wherein the secure result is an application cryptogram and wherein verification of the transaction details comprises verification of a credential provided in the true secure result by using a distributed cryptographic service.

## Claims

1. A method for carrying out a contactless payment transaction between a first computing device and a second computing device for authorisation through a transaction processing system, wherein authorisation of the contactless payment transaction comprises verifying a secure result provided by the first computing device and generated by a cryptographic process, the method comprising at the first computing device:

initiating the contactless payment transaction with the second computing device; obtaining a dummy secure result, wherein the dummy secure result is a unique value, has the format of a legitimate secure result, but is not generated by the cryptographic process; completing the contactless payment transaction with the second computing device using the dummy secure result, such that for authorisation of the wireless transaction the dummy secure result can be used to reconcile the contactless payment transaction with a true secure result; and providing the dummy secure result and information sufficient to establish a true secure result for the contactless payment transaction to enable the true secure result to be generated and matched with the dummy secure result by the transaction processing system for authorisation of the contactless payment transaction.

2. The method of claim 1, wherein the first computing device is a consumer computing device and the second computing device is a point of sale terminal, and wherein the true secure result is an application cryptogram for the contactless payment transaction.

3. The method of claim 1 or claim 2, wherein the first computing device provides the information sufficient to establish a true secure result for the contactless payment transaction to enable the true secure result to be generated to a third computing device for the third computing device to forward the true secure result to the transaction processing system with the dummy secure result.

4. The method of claim 3, wherein the first computing device receives the dummy secure result from the third computing device.

5. The method of claim 4, wherein the first computing device receives variables computed for a digital signature by the third computing device along with the dummy secure result, and wherein the first computing device uses the computed variables to digitally sign transaction data including the dummy secure result for provision to the second computing device.

6. A computing device comprising a memory and a suitably programmed processor, wherein the computing device is adapted to carry out the method of any of claims 1 to 5 as a first computing device.

7. The computing device of claim 6, wherein the computing device is a mobile telephone.

8. The computing device of claim 7, wherein the computing device comprises a wallet application adapted to perform a contactless payment transaction with the second computer device.

9. The computing device of claim 8, wherein the computing device is programmed to use host card emulation for wireless interaction with the second computing device.

10. A method to support performance of a contactless payment transaction between a first computing device and a second computing device for authorisation through a transaction processing system, wherein authorisation of the contactless payment transaction comprises verifying a secure result provided by the first computing device and generated by a cryptographic process, the method comprising at the first computing device and a third computing device:

the first computing device providing the third computing device with information sufficient to establish a true secure result for the contactless payment transaction;
the third computing device generating the true secure result using the cryptographic process;
the third computing device providing a dummy secure result to the first computing device, wherein the dummy secure result is a unique value, has the format of a legitimate secure result, but is not generated by the cryptographic process; and

and the third computing device providing the true secure result to the transaction processing system using the dummy secure result as an identifier for the contactless payment transaction whereby the transaction processing system can reconcile the true secure result with the contactless payment transaction comprising the dummy secure result provided for authorisation.

11. The method of claim 10, further comprising the first computing device and the third computing device initially establishing a secure network connection.

12. The method of claim 10 or claim 11, wherein the first computing device and the third computing device communicate by cellular telecommunications, and the third computing device is located at the base station of a telecommunications network.

13. The method of any of claims 10 to 12, wherein the secure result is an application cryptogram for the contactless payment transaction.

14. The method of any of claims 10 to 13, further comprising the third computing device obtaining a credential for the secure result from a distributed cryptographic service for providing credentials for digital transactions.

15. The method of any of claims 10 to 14, further comprising the third computing device computing variables for a digital signature for the wireless transaction, and of providing the computed variables along with the dummy secure result to the first computing device to allow the first computing device to digitally sign transaction data.

FIG. 1

FIG. 2

FIG. 3

FIG. 4

FIG. 5

FIG. 6

FIG. 7

FIG. 8

EP 4 488 910 A2

FIG. 9

EP 4 488 910 A2

18

PSP

7

Terminal

707

Smart Mobile with Android

GoS Contactless

102

Mobile Payment App

Consumer

Phase 1)—Before transaction — Loading secret session keys for AC computation

Phase 2)—During transaction—Use/Consume one secret session key for the generation of one AC cryptogram

921-[01] Consumer selects GoS App and brings active device in contactless proximity of Terminal

922-[02] Select PPSE

923-[03] SELECT PPSE

924-[04] SELECT PPSE

925-[05] Retrieve FCI Template (PPSE)

926-[06] FCI template (AID1, AID2, ...etc)

927-[07] No digital card selection by consumer

928-[08] FCI template (AID1, AID2, ...etc)

**FIG. 10**

28

FIG. 10 continued

EP 4 488 910 A2

FIG. 11

FIG. 12

FIG. 13

FIG. 14

Crypto function to provide integrity and authentication

Full or partial crypto data...

Identification of the token...

Identification of the transaction...

Identification of key, crypto method...

Any financial data...

Anything else we want to guarantee

Cardholder

Merchant

Transaction related

Full or partial transaction data...

Transaction Credentials

Validate

V

Monitor

M

Key Management

K

Generate

G

FIG. 15

Yellow    9F6EBEE120A9CB96
84B3DA12FE7DDF0C

Blue    7E8E1BEB22B9DE02
9F29C4C8F227C07A

Green    16702EED177646ED
ED1AF510FE40FFD6

Grey    8FEB12E02F4EB7AA
7ED6337CC7BF071B

Red    1EAE47824BE75ECD
F1862F2BDDD270D0

Key list "A" with 10 entries in *KeyIds*

*Identifier* 0d51839f-a66a-4fb8-8395-e88e45b447cb

(0,  ), (1,  ), (2,  ), (3,  ), (4,  ),
(5,  ), (6,  ), (7,  ), (8,  ), (9,  ),

Key list "B" with 10 entries in *KeyIds*

*Identifier* 515f3fea-337d-41ee-8681-b90af4d84071

(0,  ), (1,  ), (2,  ), (3,  ), (4,  ),
(5,  ), (6,  ), (7,  ), (8,  ), (9,  ),

= Seal

# FIG. 16

FIG. 17

o HMAC-SHAxxx-yyy *** (yyy=leftmost truncation)

o xxx=256,512... with yyy=128,256...

HMAC-SHA256-128 ***

**Full Cryptogram**
(HMAC-SHA256)
or
Truncated
Cryptogram
(HMAC-SHA256-128)

32 or 16 bytes

Data

keyId

xyz –

**Legacy or CVC2 Use Case**    C  L

o Take leftmost 1 byte
o Decimalization to 2 or 3 digits
o Verification process is generate HMAC (HSM)
   followed by a compare of decimalized value in
   software

CVC2

32/16 bytes → 1 byte → 2 or 3 digits

**UCAF or DXD Use Case**    U  X

o Take leftmost 8 bytes or 22 bits
o Might be able to use standard verify
   function** from HSM

Truncated
Cryptogram

32/16 bytes → 8 bytes or 22 bits

**DPD Use Case***    D

o Take leftmost 8 or 16 bytes
o Should be able to use standard
   verify function** from HSM

"Full" Truncated
Cryptogram

32/16 bytes → 8 or16 bytes

\*  DPD Option 1 to use 8 bytes

\*\* if not available use generate HMAC (HSM)
    followed by compare in software

\*\*\* option to use HMAC_SM3 instead of HMAC_SHAxxx

# FIG. 18

FIG. 19

FIG. 20

EP 4 488 910 A2

FIG. 21

FIG. 22

EP 4 488 910 A2

FIG. 22 continued

EP 4 488 910 A2

FIG. 23

EP 4 488 910 A2

2307-[07] UCAF v0.6

2308-[08] Create PSP cryptogram with UCAF v0.6(for security), Token info (for switching), transactionid (for matching)

2309-[09] PSP cryptogram,...

2310-[10] Provide: M1 = Token info, UCAF v0.6, Transaction Data, transactionid

FIG. 23 continued

FIG. 24

EP 4 488 910 A2

FIG. 24 continued

2414-[14] Compute Dynamic
Signature (8 bytes of
transactionid representing
"let-drop" AC, k k(power-1),
XR, e, r)

2415-[15] Dynamic Signature
(AC, tokenPan)

2416-[16] Form
GPO Command
Response

2417-[17] GPO
Command Response

2418-[18]
Authorization
request: Provide
M2: Token info,
Transaction Data,
transactionid,
other 'DES5' data

2419-
[19]
M2

2420-[20] Match M1
with M2 (on transactionid)
Verify matching of
homonym parameters

2421-If YES, Verify UCAF
v0.6 as per e-commerce,
Retrieve PAN info

2422-[21] Send transaction
to issuer for authorization

FIG. 24 continued

FIG. 25

FIG. 25 continued

FIG. 26

FIG. 27

EP 4 488 910 A2

FIG. 27 continued

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022046330 A1
- WO 2020247093 A
- WO 2022046330 A
- GB 2107661 A